(19) Europäisches Patentamt
European Patent Office
Office européen des brevets

(11) EP 1 429 235 B1

(12) **EUROPEAN PATENT SPECIFICATION**

(45) Date of publication and mention of the grant of the patent:
**25.08.2010 Bulletin 2010/34**

(51) Int Cl.:
***G06F 3/033*** *(2006.01)*

(21) Application number: **02080401.9**

(22) Date of filing: **10.12.2002**

(54) **An input device for screen navigation, such as cursor control on a computer screen**

Eingabegerät für Bildschirmnavigation, unter anderem für Cursorkontrolle an einem Computerbildschirm

Dispositif d'entrée pour navigation sur un écran, tel que le contrôle d'un curseur sur l'écran d'un ordinateur

(84) Designated Contracting States:
**AT BE BG CH CY CZ DE DK EE ES FI FR GB GR IE IT LI LU MC NL PT SE SI SK TR**

(43) Date of publication of application:
**16.06.2004 Bulletin 2004/25**

(73) Proprietor: **OPDI Technologies ApS**
**8000 Aarhus C (DK)**

(72) Inventors:
- **Hanson, Vagn Steen Grüner**
**4640 Fakse (DK)**
- **Jakobsen, Michael Linde**
**1970 Frederiksberg C (DK)**

(74) Representative: **Elmeros, Claus et al**
**Høiberg A/S**
**St. Kongensgade 59A**
**1264 Copenhagen K (DK)**

(56) References cited:
**WO-A-98/36347** **WO-A-02/093342**
**US-A- 5 907 152**

- **PATENT ABSTRACTS OF JAPAN vol. 010, no. 274 (P-498), 18 September 1986 (1986-09-18) & JP 61 095433 A (MATSUSHITA ELECTRIC IND CO LTD), 14 May 1986 (1986-05-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 429 235 B1

## Description

The present invention relates to an input device for screen navigation, such as cursor control on a computer screen, said input device comprising a housing and optical detection means for detecting the movement of a surface, said optical detection means comprising at least one set of detector means for detection of relative displacement of the surface and the input device in at least one direction of movement by receiving light emanating from the surface.

From US 5,907,152 such a device is known. The device according to D1 uses a single lens to focus the light scattered from a surface to a detection system comprising a quadruple comb arrays of photodetectors. When moving relative to the surface the output from the photodetectors is a quasi sinusoidal quadrature signal due to an optical matching of the optical system to the period of the photodetector array. The movement is then detected by a bi-directional counter. The oscillating signal for detection of movement is generated due the configuration of the photodetector.

From JP 61 095433 a device for detecting the rotational speed of a sphere is known.

From WO-A-98/36347 another input device is known. This makes it possible to produce a slim pen housing making it possible to provide an input device for a computer, which is similar to a normal writing utensil, where the computer data input device is supported by the hand of the operator rather than by the table, as it is the case by traditional computer mice. Moreover, this optical detection system is advantageous in other types of input devices, e.g. track balls, and other types of computer mice due to its simplicity.

The movement of the ball is detected by optical detection means by detecting the change in the scattered field and the associated intensity due to the surface structure of the ball. The optical detection means illuminates a spot on the surface on the top of the ball by transmitting substantially coherent light through a lens. The light is then reflected from the surface and is detected by a set of detectors.

In the optical detection system of a computer input device described in WO-A-98/36347, the lens is placed between the light source and the surface. The lens refracts the light and focuses the light on the surface creating a tiny, concentrated spot of illumination on the surface. This ensures a predetermined reflection and ensures that the reflected light is properly directed towards the detectors.

From WO 02/093342, an optical detection system is known, which is compact and eliminates the need for a lens system. This makes it easier to align the components in the compact detection system. Moreover, the use of a VCSEL-laser is described therein. This type of laser makes the detection system relatively inexpensive in manufacture and provides a light source that has low power consumption. However, the level of radiation emitted from the laser may be of some concern if the ball of the input device is removed or if this detection system is to be used in an input device that detects relative movement directly on a surface. The level of radiation could potentially be damaging to the eye. The movement detection precision depends on the number of detector elements. The precision may be increased by providing more detectors. However, the precision of the movement detection is in practise somewhat limited, as the computing power needed to calculate the detected signals increases with the number of detector elements provided.

In light of this, it is the object of the invention to provide a compact input device with a compact detection system for tracking a relative movement between the input device and a surface and in particular, to provide an input device having a compact optical detection means with a relatively low radiation emission level, preferably making the entire system be classified as a Class 1 with respect to laser safety, cf. International Standard: Safety of laser products, Part 1, IEC 60825-1, Ed. 1.1, 1998-01. Another preferred object is also to provide an inexpensive compact yet precise optical detection system for the input device.

The invention consists of the optical detection means comprising at least one substantially coherent light source positioned in the housing substantially in the same plane as the detection means, said light source illuminating at least a part of said surface, and an optical member including at least three optical elements for mapping of different specific first areas of the projected intensity pattern (speckle pattern) arising from the object onto substantially the same second area on the detection surface thereby generating an oscillating optical signal from the surface movement in at least one of the first and second areas.

Hereby, an inexpensive and compact input device is provided that has an optical detection system, which emits a low amount of radiation by optionally splitting the emitted beam from the light source into at least two or three, so that the resulting exposure on the outside of the input device, e.g. on the surface is so low that an input device according to the invention may be classified as a Class 1 laser-based product, as the risk of providing permanent eye damages at the retina if an eye is exposed to radiation from the device is at least significantly reduced or even completely eliminated. By an input device according to the invention, this attractive low radiation emission rate may be achieved without compromising the signal quality of the detecting means.

The detecting means receive the light scattered from the surface and the light is by means of the detectors converted into an oscillating signal representing the movement of the surface. The frequency of the signal will be proportional to the velocity component of the translating surface. The detector means comprise at least two detector elements. In the detector elements, this optical signal is converted into a corresponding electronic signal.

By the invention, it is realised that the input device may be a separate unit or integrated in a product for controlling by screen navigation with a visual feedback to the user or at least integrated with other auxiliary products for controlling a computer product for controlling said product by amongst other things screen navigation. Accordingly, it is realised that the input device for screen navigation may advantageously be used for cursor screen navigation on a personal computer, e.g. in the form of a computer mouse with or without a ball, a pen-like shaped computer mouse, a track ball and/or a in connection with a joy stick. Moreover, it is realised that the input device may be suitable for use in a number of other applications, such as movement of a cursor for screen navigation in a GPS (GPS: Global Positioning System), e.g. a handheld GPS, a telephone or any other similar applications where a visual feedback from a display is appropriate for the operation of the apparatus to which the input device is associated.

In an embodiment of the invention well suited for optical displacement detection purposes, a collimated light source is provided for illuminating the optical member, and an imaging system is provided for imaging the optical member onto the surface thereby forming a fringe pattern on the surface.

In another embodiment of the invention, light emanating from the object is received at an input plane. The optical member directs light emanating from different parts of the input plane in substantially the same direction by corresponding elements of the optical member.

The individual optical elements may interact with light by reflection, refraction, scattering, diffraction, etc, either alone or in any combination, of light incident upon them. Thus, the individual optical elements may be lenses, such as cylindrical lenses, spherical lenses, Fresnel lenses, ball lenses, etc, prisms, prism stubs, mirrors, liquid crystals, etc.

Alternatively, the optical member may be formed by a diffractive optical element, such as holographically produced lenses, etc. Further, the optical member may comprise a linear phase grating with a sinusoidal modulation of the film thickness, e.g. in a photo resist film. The splitting of the light beam by a diffractive optical element or the like is particularly advantageous in relation to systems where the substantially coherent light can escape to the surroundings. This makes the optical movement detection system suitable for input devices for screen navigation without detecting movement on a rotating ball inside the housing, e.g. a computer mouse with direct movement detection relative to the surface on which it is operated, or a touch screen or similar finger operated cursor control devices.

After interaction with the individual optical elements, the light may be transmitted through the elements or be reflected from the elements, e.g. appropriately coated for reflection. The system also comprises a detector system with at least one optical detector element for conversion of light incident upon it into a corresponding electronic signal. The detector is positioned in the propagation path of the light emanating from the optical member.

The invention is most easily understood considering an embodiment wherein the optical member is a repetitive optical member constituted by a linear array of cylindrical lenses. The focal length of the lenses may be positive or negative. For simplicity, only positive lenses are depicted in the appended figures. The input plane is located in front of the array of lenses at a distance equal to the focal length of the lenses and perpendicular to the direction of propagation of the incoming light emanating from the object.

Light scattered from a portion of the surface, will form a speckle pattern on the optical member. A part of the surface maybe imaged onto the input plane or the speckle pattern produced at the optical member due to diffusely scattered light from the surface. Preferably, the part of the surface is illuminated by a laser, such as a VCSEL, and a speckle pattern could be detected at the input plane, e.g. by intensity measurements, caused by variations of the electromagnetic field along the input plane. In the following, such electromagnetic intensity variations are termed "speckle variations". When the object is displaced, the speckle variations move correspondingly along the input plane. The ratio of the surface velocity and the velocity of the speckle pattern will be given by an optional optical system between the object and the input plane. In case there is no optical system in between, this ration will be determined by the distance between the two and the radius of curvature of the illuminating beam. The individual optical elements direct the light towards an optical detector of the embodiment. When a speckle variation at the input plane has moved a distance that is equal to the width of an individual optical element, the corresponding light emanating from the individual optical element sweep across the area of the optical detector(s). This is repeated for the next optical element, and it is seen that when a speckle variation has traversed a distance equal to the length of the linear array, the optical detector is swept repetitively a number of times equal to the number of individual optical elements of the linear array. It is seen that for a regular speckle variation pattern at the input plane with a speckle size that is substantially equal to the size of an individual optical element, the intensity of the electromagnetic field at a detector element varies between a high intensity when light areas of the speckle variations are aligned with the optical elements and a low intensity when dark areas of the speckle variations are aligned with the optical elements, and that the frequency of the oscillations corresponds to the velocity of displacement of the speckle variations in the direction of the longitudinal extension of the linear array divided by the array pitch, i.e. the distance between individual neighboring optical elements.

This principle of operation applies in general to other embodiments of the present invention regardless of the type of optical member utilized and regardless of whether or not an image of the object is formed at the input plane. For example, a point source positioned substantially at the input plane and emitting a diverging beam of light may illuminate the object. The radiation is diffusely reflected by the object and received at the input plane. It is well known in the art that speckle variation displacements at the input plane is twice the corresponding displacements at the surface of the object regardless of the distance between the object and the input plane.

Alternatively, the object may be illuminated by a collimated beam of light in which case, the displacement of speckle variations at the input plane is equal to corresponding displacements at the surface of the object independent of the distance between the object and the input plane.

In another embodiment of the present invention, a Fourier transforming lens is positioned between the object and the input plane in such a way that the input plane is positioned at the Fourier plane of the Fourier transforming lens, i.e. at the back focal plane of the lens, whereby rotational displacement of a spherical surface can be determined independent of the distance between the object and the input plane. Furthermore, the detected frequency will be independent of the radius of curvature of the rotating surface and independent of the wavelength.

The optical member provides a spatial filtering of the electromagnetic field at the input plane in such a way that moving speckle variations of a size comparable to the size or smaller of the individual optical elements leads to an oscillating detector signal. The speed of movement can e.g. be measured by zero-crossing detection of this signal.

It is seen that a two-dimensional speckle displacement may be determined with an embodiment of the present invention having a two-dimensional array of optical elements.

In a preferred embodiment of the present invention, the system further comprises an imaging system for imaging part of the input plane onto the at least one detector element whereby each of the individual optical elements in combination with the imaging system images a part of the input plane onto the same specific area of an output plane so that points at the input plane that are positioned at the same relative positions in relation to adjacent respective optical elements are imaged onto the same point at the optical detector. As further explained below, without the imaging system, there is a small distance between imaged points at the detector for corresponding points at the input plane having the same relative position in relation to respective optical elements. However, the accuracy of the system may still be sufficient and will depend on the actual size of the system.

The optical member and the above-mentioned imaging system may be merged into a single physical component, such as a moulded plastic component, in order to obtain a further compact system suited for mass production.

The optical displacement detection means with the optical member facilitates determination of speckle variation movement at the input plane in a direction of the optical member. An optical system positioned between the surface and the input plane determines the type of surface movement that is determined by converting the speckle variations arising from the specified surface movement into a linear speckle translation in the system input plane. The surface movement could be in-plane plane rotation and/or displacement, such as one- or two-dimensional displacement, one- or two-dimensional velocity, angular displacement, angular velocity, etc.

The number, size, and position of the detector elements together with the processing of the signals obtained from the elements, such as subtraction, addition, etc, determine the suppression of harmonics in the output signal. Specifically, the direction of movement of speckle variations can be probed in case two signals in quadrature (or close to quadrature) are obtained. This means that the frequency of the detector signals given by the surface velocity and detected in the two channels will be the same, but their mutual phase will be shifted with close to 90 degrees.

It is an important advantage of the present invention that the optical detection means or displacement sensor only comprises a few optical detector elements, such as one, two, four, six or seven, etc, elements.

Occurrence of velocity signal drop out may be reduced by provision of a second set of optical detector elements that is displaced in relation to the existing set of detector elements so that a signal that is statistically independent of the other signal may be available from one set of detector elements during absence of a signal from the other set of detector elements. Thus by proper processing of the two signals, e.g. switching to a set of detector elements generating a reliable velocity signal, the effect of signal drop out on the accuracy is minimised.

By the term screen is meant any kind of visual display. In relation to the field of use, it is realised that the input device is intended for the purpose of screen navigation including an optional visual feedback to the user of the input device.

The invention is described in more detail under reference to the accompanying drawings, in which:

| | |
|---|---|
| Fig. 1 | shows a schematic detailed view of an input device according to a first embodiment of the invention, |
| Fig. 2 | shows a schematic detailed view of an input device according to a second embodiment of the invention, |
| Fig. 3 | shows a schematic detailed view of an input device according to a third embodiment of the invention, |
| Fig. 4 | shows a schematic detailed view of an input device according to a fourth embodiment of the invention, |
| Fig. 5 | schematically illustrates a preferred embodiment of a displacement sensor according to the present invention, |
| Fig. 6 | illustrates the operating principle of the displacement sensor of Fig. 5, |
| Fig. 7 | schematically illustrates another preferred embodiment of a displacement sensor according to the present invention, |
| Fig. 8 | illustrates the operating principle of the displacement sensor of Fig. 7, |
| Fig. 9 | schematically illustrates electromagnetic wave propagation in the displacement sensor of Fig. 5, |
| Fig. 10A | schematically illustrates a displacement sensor with a Fresnel lens array, |

Fig. 10B schematically illustrates a displacement sensor with a linear phase grating having a sinusoidal modulation in the film thickness,
Fig. 11 schematically illustrates a displacement sensor with a prism array,
Fig. 12 illustrates the operating principle of the displacement sensor of Fig. 11,
Fig. 13 schematically illustrates a displacement sensor with an array of prism stubs,
Fig. 14 illustrates the operating principle of the displacement sensor of Fig. 13,
Fig. 15 illustrates an embodiment operating like a Laser Doppler Anemometer, with only the transmitter part sketched,
Fig. 16 illustrates another embodiment operating like a Laser Doppler Anemometer, with only the transmitter part sketched,
Fig. 18 is a plot of a detector element signal from an embodiment shown in Figs 15 and 16, ,
Fig. 19 is a plot of a signal from a displaced optical detector element having a phase lag in relation to the signal shown in Fig 18,
Fig. 20 is a plot of the difference between the signals shown in Figs 18 and 19,
Fig. 21 illustrates the definition of the input plane for an embodiment of the invention,
Fig. 22 illustrates the definition of the input plane for another embodiment of the invention,
Fig. 23 illustrates the definition of the input plane for yet another embodiment of the invention,
Fig. 24 illustrates combining of optical components of a displacement sensor according to the present invention,
Fig. 25 illustrates another way of combining of optical components of a displacement sensor according to the present invention,
Fig. 26 illustrates combining of optical components of a displacement sensor with a prism array according to the present invention,
Fig. 27 schematically illustrates a displacement sensor according to the present invention with optical components combined with a prism,
Fig. 28 schematically illustrates another displacement sensor according to the present invention with optical components combined with a prism,
Fig. 29 schematically illustrates a two-dimensional array of prism stubs,
Fig. 30 illustrates electromagnetic wave propagation of waves to the detector plane having been refracted by an array of prism stubs followed by a large spherical lens,
Fig. 31 schematically illustrates the operation of a linear displacement sensor system according to the present invention,
Fig. 32 schematically illustrates the operation of another linear displacement sensor system according to the present invention,
Fig. 33 schematically illustrates the operation of a displacement sensor system for determination of rotational displacement according to the present invention,
Fig. 34 schematically illustrates a reflection configuration of the present invention for determination of linear displacement,
Fig. 35 schematically illustrates a reflection configuration of the present invention for determination of rotational displacement,
Fig. 36 schematically illustrates a reflection configuration of the present invention for determination of 2D rotational displacement,
Fig. 37 schematically illustrates a reflection configuration of the present invention for determination of 2D linear displacement,
Fig. 38 schematically illustrates a simple detector configuration,
Fig. 39 is a plot of a signal provided by the detector illustrated in Fig. 38,
Fig. 40 is a plot of the power spectrum of the signal shown in Fig. 39,
Fig. 41 schematically illustrates another detector configuration,
Fig. 42 is a plot of a signal provided by the detector illustrated in Fig. 37,
Fig. 43 is a plot of the power spectrum of the signal shown in Fig. 42,
Fig. 44 schematically illustrates yet another detector configuration,
Fig. 45 is a plot of a signal provided by the detector illustrated in Fig. 44,
Fig. 46 is a phase plot of the signal shown in Fig. 45,
Fig. 47 schematically illustrates still another detector configuration,
Fig. 48 is a plot of a signal provided by the detector illustrated in Fig. 47,
Fig. 49 is a phase plot of the signal shown in Fig. 48,
Fig. 50 schematically illustrates a miniaturized embodiment of the invention, and
Fig. 51 schematically illustrates another miniaturized embodiment of the invention,
Fig. 52 shows a first embodiment of the detection means of the input device according to the invention,

| | |
|---|---|
| Fig. 53 | shows a second embodiment of the detection means of the input device according to the invention, |
| Fig. 54 | shows a power spectrum of the response for a representation detector configuration, |
| Fig. 55 | shows an embodiment where a lens array is functioning in the receiver as well as in the transmitter part of the detection means, |
| Fig. 56 | shows an intensity distribution at the object position, |
| Fig. 57 | shows a speckle pattern arising from illumination of a rough surface with a set of elongated spots, |
| Fig. 58 | shows the speckle power spectrum at the lenslet array position, |
| Fig. 59 | shows a schematic principal view of an embodiment similar to the embodiment shown in fig. 55, |
| Fig. 60 | shows the speckles provided by the system shown in fig. 59, |
| Fig. 61 | shows another set-up of the detection means shown in principle in fig. 53 using a lens array and a CMOS array as detector element, |
| Figs. 62 to 65 | show two embodiments of the invention, where the detection means include three or four detector sets for detection of movement in three dimensions, i.e. *x*-, *y*-velocity and in-plane rotation of the speckles. |

Figures 1 to 4 shows various embodiments of input devices 100 with optical detection means 103 for detecting the surface movement of a rotary member, such as ball 102 (figs. 1-3) or an underlying surface structure (fig. 4). The ball 102 is mounted in a housing 101. The detection means 103 include a light source 104 and sets of detectors 105. The ball 102 may be rolling on an underlying surface, as shown in fig. 1 and fig. 2 showing a "traditional" computer mouse design or a computer pen design, respectively. Alternatively, the ball may be rolled by the user as shown in fig. 3 (a track ball solution).

Fig. 5 schematically shows a displacement sensor 10 in an input device according to the present invention with a linear array 12 of cylindrical lenses 18. $f_1$ is the focal length of the cylindrical lenslets 18. The input plane 14 is located at a distance equal to the focal length $f_1$ of the lenslets 18 and perpendicular to the direction 16 of propagation of the incoming light emanating from the object (not shown). In this embodiment 10, the scattered light from the object hits the input plane 14. Preferably, a laser illuminates the part of the surface, and a speckle variation is generated at the input plane. When the object is displaced, the speckle variations move correspondingly along the input plane 14. The individual cylindrical lenses 18 direct the light 16, 20 towards a refractive lens 22 having a focal length $f_2$ and being positioned a distance equal to $f_1 + f_2$ from the linear array 12. The lens 22 further refracts the light 20 into waves 24 propagating towards optical detector elements 26, 28, and 30 positioned at the back focal plane of lens 22. In this way, the input plane 14 is repeatedly imaged onto an output plane 15. The detector elements 26, 28, 30 are positioned so that their individual surfaces for reception of light coincide with the output plane 15. It is seen that an area 32 of the input plane is imaged onto an area 34 of a detector element 28 and that corresponding areas 36 that are located at the same relative positions in relation to adjacent respective cylindrical lenses 18 are imaged onto the same area 34 of the optical detector constituted by the detector elements 26, 28,30.

It should be noted that the distance between the linear array 12 and the lens 22 is chosen to be equal to $f_1' + f_2$ in the present example for ease of explanation of the operation of the displacement sensor 10. However, the displacement sensor 10 operates with any distance between the linear array 12 and the lens 22. For compactness, it may be preferred to set the distance to zero.

It should also be noted that in an imaging system as the one shown in Fig. 31, rotational displacement of the object does not lead to translation of the speckle displacement in the input plane. However, rotational displacement of the object will typically lead to speckle decorrelation, usually denoted "speckle boiling."

The operating principle of the displacement sensor of Fig. 5 is further illustrated in Fig. 6. When a speckle variation 16 at the input plane 14 has moved a distance 38 that is equal to the width of an individual optical element 18, the corresponding image formed by the combination of lens 22 and the respective cylindrical lens 18 sweeps across the area of the optical detector elements 26, 28, and 30. This is repeated for the other optical elements 18, and it is seen that when a speckle variation has traversed a distance equal to the length of the linear array 12, the optical detector 26, 28, 30 is swept repetitively a number of times equal to the number of individual optical elements 18 of the linear array 12. It is seen that for a regular speckle variation pattern at the input plane with an average speckle size that is comparable with the size 38 of an individual optical element 18, the intensity of the electromagnetic field at a detector element 26, 28, 30 varies between a high intensity when bright areas of the speckle variations are aligned with the sensor elements 26, 28, 30 and a low intensity when dark areas of the speckle variations are aligned with the optical elements 26, 28, 30, and that the frequency of the oscillations corresponds to the velocity of displacement of the speckle variations in the direction of the longitudinal extension of the linear array 12 divided by the array pitch, i.e. the distance between individual neighbouring optical elements, 38.

As previously mentioned, the same principle of operation applies in general to other embodiments of the present invention regardless of the type of optical member utilized and regardless of whether or not an image of the object is formed at the input plane 14.

Fig. 7 schematically shows another displacement sensor 11 according to the present invention without the lens 22, i.e. without an imaging system that images the input plane 14 onto the output plane 15. In this embodiment, the receiving areas of the detector elements 26, 28, 30 define the output plane 15. As more clearly illustrated in Fig. 8, without the imaging system, there is a small distance between imaged points 34 at the detector 26, 28, 30 for corresponding points 32 at the input plane 14 having the same relative position in relation to the respective optical elements 18. However, the accuracy of the system 11 may still be sufficient and will depend on the actual size of the system 11.

In Fig. 9, the image forming of the displacement sensor shown in Fig. 5 is further illustrated, and it is seen that the position of the intersection 34 between the optical detector element 28 and incident light 24 is independent of the slope of the electromagnetic wave 16 incident on the input plane 14. It only depends on the relative position of the intersection 32 between the input plane 14 and the input wave 16 in relation to the adjacent optical element 18.

Fig. 10A schematically illustrates a displacement sensor similar to the sensor shown in Fig. 5, wherein the linear array of cylindrical lenses has been substituted with a Fresnel lens array 42. The linear array of cylindrical lenses may alternatively be substituted by a diffractive optical element 42.

Likewise Fig. 10B schematically illustrates a displacement sensor similar to the sensor shown in Fig. 5, wherein the linear array of cylindrical lenses has been substituted with a linear phase grating 43 with a sinusoidal modulation of the film thickness, e.g. in a photo resist film. The phase grating can be made by exposing a (thick) photo resist plate with an interference pattern made by crossing two laser beams. Incident light will primarily be diffracted in the "plus first" and "minus fist" order. Besides, non-diffracted light will pass directly through the phase grating.

In Fig. 11, an alternative embodiment of the displacement sensor shown in Fig. 7 is illustrated, wherein the linear array of cylindrical lenses has been substituted by a linear array 44 of prisms. The two sides of each prism refract incoming rays of light towards two respective detector elements 26, 30

The operating principle of the displacement sensor of Fig. 11 is more clearly illustrated in Fig. 12 showing that a speckle variation is alternatingly directed toward the two respective detector elements 26, 30 when the speckle variation traverses the linear prism array 44 along its longitudinal extension.

In Fig. 13, a similar embodiment of the displacement sensor is illustrated, wherein the linear array of cylindrical lenses has been substituted by a linear array 44 of prism stubs. As before, the two sides of each prism refract incoming rays of light towards two respective detector elements 26, 30 while the top surface transmits or refracts incoming rays toward a third detector element 28.

The operating principle of the displacement sensor of Fig. 13 is more clearly illustrated in Fig. 14 showing that a speckle variation is alternatingly directed toward the three respective detector elements 26, 28, 30 when the speckle variation traverses the linear prism stub array 44 along its longitudinal extension.

It should be noted that the direction of propagation of waves refracted by the prisms depends on the slope of the direction of propagation of the incoming light. It should also be noted that the phase difference between detector signals is fixed. It is an important advantage of these embodiments of the invention that the phase difference is determined by the geometry of the optical member and independent on the detector element positions. It is another advantage that utilization of prisms facilitates utilization of small detectors.

Fig. 15 illustrates an embodiment 80 of the invention that operates like a Laser Doppler Anemometer. Light 82 emitted from a point source laser 84 is collimated by lens 86 and the collimated light illuminates an array 12 of cylindrical lenses. Lenses 88 and 90 form a telescope that images the focal spots of the cylindrical lenses 12 in the measuring volume 92 whereby a set of straight and equidistant fringe planes 94 is formed in the measurement volume 92. It is seen that the first areas occupied by the fringes 94 are mapped into the same second area 96 at the laser source 84.

Fig. 16 illustrates another embodiment 100 of the invention, which is similar to the embodiment 80 shown in Fig. 15, however, in this embodiment a linear array 12 of spherical lenses has substituted the array of cylinder lenses in Fig. 15. This leads to equidistant and straight cylindrical focal lines 94.

A solid surface passing the fringes created in the measuring volume will scatter light. A detector place at an arbitrary position will give rise to a modulated signal, the frequency of which is given by the velocity component perpendicular to the fringes divided by the fringe distance.

Fig. 18 is a plot of the output signal 114 from one of the detector elements generated in response to the oscillating optical signal. A corresponding signal 116 from an adjacent detector element is shown in Fig. 19. This signal 116 is phase shifted in relation to the signal 114 shown in Fig. 18 because of the physical displacement of the detector elements. Since the low frequency pedestals of the two signals are substantially identical, the difference between the two signals 114, 116 is an AC-signal 118 as shown in Fig. 20. It is preferred that the phase shift between the two detector elements 26, 28; 28, 30 is substantially equal to 90° so that the direction of the particle velocity can be deduced whereby the requirement of a costly Bragg-cell is eliminated. The angle of the incident laser beam is not critical. A forward scattering system provides the largest signals, however, a back scattering system may be preferred for other reasons.

In this embodiment 102 of the invention, it is seen that first areas of the measurement volume 108, i.e. corresponding to the virtual fringes, are mapped into the same second area at a detector element.

Fig. 21 illustrates the definition of the input plane 14 of the system. In the embodiment 10 shown in Fig. 5, the output plane 15, defined by the detector element 26, 28, 30 surfaces, is imaged onto the input plane 14 by the combination of the lens array 12 and the lens 22. Thus, rays 120 emitted from the output plane 15 would be focused onto the input plane 14 by an element 18 of the optical member 12.

Fig. 22 illustrates the definition of the input plane 14 for the embodiment 11 shown in Fig. 7. There is no imaging system in this embodiment 11; however still, rays 120 emitted from the output plane 15 would be focused onto the input plane 14 by an element 18 of the optical member.

Fig. 23 illustrates the definition of the input plane for the embodiment shown in Fig. 11. Also, in this embodiment, there is no imaging system; however still, rays 120 emitted from the output plane 15 would be focused onto the input plane 14 by an element of the optical member 44.

Figs. 24-26 illustrates various ways of combining the optical components of the previously illustrated displacement sensors in order to provide a further compact system suited for mass production.

In Fig. 27 and 28, the optical components have been combined with a prism to limit the linear extension of the system. In Fig. 28, the lens 22 shown in Fig. 16 has been substituted by a concave mirror 23.

Fig. 29 schematically illustrates a repetitive optical member in the form of a two-dimensional array 46 of prism stubs for simultaneous determination of speckle displacement in two dimensions. Fig. 30 illustrates electromagnetic wave propagation of waves 50 having been refracted by a prism stub and collected by a lens 22. It is seen that a flat top prism refracts incoming beams of light into five directions towards five different respective detector elements. The phase difference between detector element output signals depends solely on the geometry of the flat top prism array. It does not depend on detector element position. A prism array 44, 46, 48 facilitates the use of small detector elements.

Fig. 31 schematically illustrates a displacement sensor system 52 according to the present invention, comprising an imaging system 54 that images a part 56 of the surface of a moving object 58 onto the input plane 14 of a displacement sensor 10 also shown in Fig. 5. The object 58 is illuminated with a collimated laser beam 60 so that the velocity component along the intersection of the input plane 14 and the plane of Fig. 31 determined at the input plane 14 is the magnification ratio of the imaging system 54 times the corresponding velocity component of the surface 56.

Fig. 32 schematically illustrates a displacement sensor system that differs from the displacement sensor system shown in Fig. 31 in that the system 62 does not have an imaging system 54 and that the object 58 is illuminated with a divergent laser beam 56 emanating from a point source, e.g. a VCSEL, positioned at the input plane 14. It is well known in the art that speckle variation displacements at the input plane is twice the corresponding displacements at the surface of the object regardless of the distance between the object and the input plane. Thus, the velocity component along the intersection of the input plane 14 and the plane of Fig. 32 determined at the input plane 14 is two times the corresponding velocity component of the surface 58.

Fig. 33 schematically illustrates yet another displacement sensor system 66 according to the present invention, comprising a Fourier transforming lens 70 positioned so that its Fourier plane, i.e. the back focal plane of lens 70, coincides with the input plane 14 of a displacement sensor 10 also shown in Fig. 9. The object 68 is illuminated with a collimated laser beam 60 and the velocity component of the speckles in the input plane along the intersection of the input plane 14 and the plane of fig. 21 corresponds to the angular velocity of the object 68.

It should be noted that translational displacement of the object 68 does not lead to translation of speckle variations in the input plane. However, translational displacement of the object 68 will typically lead to speckle boiling.

Fig. 34 schematically illustrates a displacement sensor system 75 for determination of linear displacement with a reflecting member 12 comprising a linear array of cylindrical concave mirrors 18 performing an optical function similar to the optical function of the cylindrical lenses shown in e.g. Fig. 5. The displacement sensor operates similar to the operation of the sensor shown in Fig. 7 apart from the fact that the optical member 12 shown in Fig. 24 reflects light while the corresponding optical member 12 shown in Fig. 7 refracts light.

Fig. 35 schematically illustrates another reflection configuration 76 of the present invention for determination of rotational displacement also having a reflecting member 12 comprising a linear array of cylindrical concave mirrors 18. The system illustrated operates similar to the system illustrated in Fig. 33, however, it should be noted that in the system 76, the functions of lenses 22 and 70 of the system illustrated in Fig. 33 are combined into one lens 22.

Fig. 36 schematically illustrates a displacement sensor system 77 for determination of rotation in two dimensions. The system 77 is similar to the one-dimensional system 76 illustrated in Fig. 35, however, the linear array of cylindrical concave mirrors has been replaced by a two-dimensional array 12 of spherical concave mirrors 18, and two optical detector elements 27, 29 have been added facilitating detection, in combination with detector element 28, of speckle movement in a direction substantially perpendicular to the direction of movement detected by the combination of optical detector elements 26, 28, 30.

Likewise, Fig. 37 schematically illustrates a displacement sensor system 78 for determination of displacement in two dimensions. The system 77 is similar to the one-dimensional system 75 illustrated in Fig. 34, however, the linear array of cylindrical concave mirrors has been replaced by a two-dimensional array 12 of spherical concave mirrors 18, and two optical detector elements 27, 29 have been added facilitating detection, in combination with detector element 28, of speckle movement in a direction substantially perpendicular to the direction of movement detected by the combination of optical detector elements 26, 28, 30.

Fig. 38 shows a fundamental detector element configuration 80 of an embodiment of the invention. Fig. 39 is a plot of the detector signal 82 and Fig. 40 is a plot of the power spectrum 84 of the detector signal. It should be noted that the low frequency part 86 and the second harmonic 88 of the spectrum 84 are quite significant. The low frequency noise leads to a variation of the running mean value that will introduce significant errors in velocity determinations based on zero-crossing detection. The width of the detector has been selected for optimum suppression of the third harmonic of the fundamental frequency. The detector element is assumed to have a rectangular shape and thus, the power spectrum of the detector function is a sine-function. In order to eliminate every third harmonic of the detector output signal, the width of each detector element is selected to be substantially equal to one third of the full width of the detector array that again is selected to be equal to the width repetitively swept by a speckle traversing the input plane.

In Fig. 41, a configuration of two matched detector elements 92, 94 is shown. The distance between the elements corresponds to a phase shift of 180°. The output signals from the detector elements are subtracted for suppression of the low frequency part of the signals and the even harmonic frequencies of the fundamental frequency. The difference signal 96 is plotted in Fig. 42, and the power spectrum 98 is plotted in fig. 43. The suppression of the low frequency part 86 and the second harmonic 88 is clearly demonstrated by comparison with Fig. 40.

An almost-phase-quadrature detector configuration 100 is shown in Fig. 44, wherein six detectors of equal size form two subtracted signals 102, 104. The two subtracted signals 102, 104 are 60 degrees out of phase, and therefore suitable for determination of e.g. direction of the speckle translation or sub-radian phase resolution. In this configuration 100, an exact phase quadrature cannot be achieved without changing the detector width 106 thereby reducing the suppression of the third harmonic. The subtracted almost-phase-quadrature signals 108, 110 are plotted in Fig. 45, and Fig. 46 is a phase plot 112 of the signals 108, 110. The phase plot 112 has an elliptical shape, which facilitates determination of the direction of the speckle translation and eventually sub-radian measurement accuracy. However, due to the elliptically shape of the phase plot this configuration will be noise sensitive.

The detector configuration 114 shown in fig. 47 provides a substantially exact phase-quadrature detector arrangement. Seven detectors of three different sizes form two subtracted signals 116, 118. The two signals 116, 118 are 90 degrees out of phase and therefore facilitate determination of direction of object velocity and sub-radian phase resolution. Fig. 48 is a plot of the subtracted phase-quadrature signals 120, 122, and Fig. 49 is the corresponding phase plot 124. The phase plot 124 is circular facilitating determination of the direction of the object velocity and sub-radian measurement accuracy. The circular shape of the traces in the phase plot makes this configuration less sensitive to noise.

Fig. 50 and 51 show some embodiments of the present invention. The working distance between the input plane and the target surface is 40 mm. The pitch of the cylindrical lens array is 30 $\mu$m and the focal length is 38.7 $\mu$m. The distance between detector elements 26, 28 are 1.6 mm, and the distance between the lens 22 and the detector elements 26, 28 is 3.2 mm.

In the following, the impact on laser classification and thus the issue of laser safety with respect to speckle-based sensors for translation measurement is discussed, especially the sensor concept based on having a lens array in the detector component. In many applications, direct access to the emitted radiation may pose a problem as the wavelength is in the near infrared region (approx. 850 nm), where the safety regulations are most severe. This is because the eye is able to focus the radiation on the retina, yet the sensitivity of the eye is extremely low in this wavelength region. This means that a damaging radiation could occur, without proper warning from the sensory system, i.e. the visual impact. Therefore, this issue is of vital importance for the use of laser-based systems, especially in consumer products.

The laser safety standard, International Standard: Safety of laser products, Part 1, IEC 60825-1, Ed. 1.1, 1998-01, describes the main safety hazard for the visible and near infrared region to be retinal damage. Therefore, a maximum permissible emission level (AEL) is assigned for a particular class of laser-based products. The lowest class for laser products is named Class 1, the product in which should have an affixed explanatory label bearing the words: "CLASS 1 LASER PRODUCT" without any further warning. For systems having a class 2 laser product, the label should include a warning stating "DO NOT STARE INTO BEAM". Laser-based products for the consumer market should preferably contain a laser source with an output intensity that makes it a class 1 product. Class 2 only includes visible lasers, i.e. lasers with a wavelength between 400 nm and 700 nm.

In a preferred embodiment of the input device according to the present invention, the output beam is intended to have a wavelength of 850 nm and a collimated beam of width below 1 mm. This means that the eye pupil can collect the total emitted power. In this case, the AEL according to Ref. 1 will be 0.24 mW. This will for most applications be below the power needed for an acceptable signal to be obtained. For point sources with a power below 0.24 mW, no retinal damages are foreseen.

If it is assumed a collimated beam is provided from a VCSEL (wavelength 850 nm) with a diameter of 0.4 mm, the diffraction-limited spot at the retina will be approximately 0.12 mm, assuming a diameter of the eye of 50 mm. If two collimated beams with an angular separation of 3 degrees are emitted, the eye will perceive two spots separated with a retinal distance of approximately 2.5 mm. In essence, there is no overlap between the two focused spots at the retina and therefore the permissible exposure for each of the spots should not be exceeded but the total incident power through the eye pupil (cornea) could be twice the AEL value while still having a laser source classified as Class 1.

So, if the outgoing beam is divided into e.g. nine angularly separated beams of equal intensity, the total power incident on the target - or the careless user staring into the emitted beam(s) - could be 9 X 0.24 mW, which goes beyond 2 mW, without exceeding the threshold for the system being classified as a Class 1 laser product. One should note that the emitted power from commonly sold laser pointers exceeds 1 mW.

The next question arises, whether it is feasible or compatible with the measurement scheme to divide the emitted power into several beams, i.e. the impact on the signal quality. Going back to the presentation of the measurement scheme, the power spectrum of the signal from the difference between two photo detector signals can be written:

$$PS = \left|S_{speckle}\right|^2 \cdot \left|S_{unit}\right|^2 \cdot \left|S_{\det}\right|^2 \cdot \left|S_{array} \otimes S_{illum}\right|^2$$

Here, the three last terms arise from the total detector set-up including the detector width, the number of lenslets in the cylinder lens array and the size of the lenslets. The first term is the spectrum of the speckle field in front of the lens array. A representative frequency response including the last three terms is shown in Fig. 54.

Large speckles will have a narrow spectrum, i.e. a Gaussian curve with a maximum positioned at zero frequency. If the speckles become too large, the spectrum will not reach the peak of the power spectrum shown in Fig. 54. One would claim that the speckles will cover several lenslets simultaneously and speckle averaging will be the result. On the other hand, if the speckles get too small, the speckle spectrum will increase in width and the higher harmonics in the detector response, Fig. 54, will be excited. But more importantly, the spectral power from the speckles falling within the response curve will decrease, and thus the signal strength will decrease. It is obvious that a maximum for the signal strength as a function of the speckle size will exist provided that the spectrum is Gaussian.

To proceed, we have to note that the integrated speckle power spectrum is equal to the variance of the signal, which for a given incident power on the object is almost constant independent of the speckle size distribution. Consequently, there might exist a possibility for "squeezing" the speckle spectrum into the spectral region in which the detector configuration has its pass band, cf. Fig. 54. In physical terms, this means that the speckle image that is sheared across the lenslets will have to get a periodic structure that matches the periodic structure of the lens array. In this case, the entire system will exhibit a Moiré-like effect with an expected stronger signal as a result.

Fig. 55 shows a set-up with a receiver configuration. The main difference being that the diverging output from the VCSEL is collimated by the $f_2$-lens where after the collimated beam will pass the cylinder lens array.

The beam depicts the beam propagation in case the large spherical lens, $f_2$, only collimates the beam from the VCSEL. In case the exiting beam passes the lens array, the intensity distribution at the target position will be a series of elongated spots as shown in Fig. 56. The following parameters are used:

- $A_s$ is the aperture diameter at the lens array position
- $w_d$ is the distance to the object
- $\lambda$ is the wavelength of the emitted light
- $\Lambda$ is the separation of the lenslets in the array, i.e. the pitch of the array.
- $f_c$ is the focal length of the lens array

If relevant numbers in the above expressions shown in Fig. 56 are inserted, a horizontal spot separation of 200 μm and a spot height of 1.5 mm are achieved. This is based on having the following values:

- $A_s$ 1 mm
- $w_d$ 3 mm
- $\lambda$ 1 μm
- $\Lambda$ 15 μm.
- $f_c$ 30 μm

With this irradiance of the object, the speckle spectrum at the lenslet array will exhibit a peak at a spectral position given by the product of the wavelength and the distance from the object to the lens array divided by the spot separation as given by the expression in Fig. 56.

A set of experiments was performed in which collimated laser light was made to pass a cylinder lens array after which an intensity distribution as shown in Fig. 56 was projected onto the object. The speckle pattern in the far field was recorded with a CCD array. A representative recording is shown in Fig. 57. This shows, as expected, a fine structure in the speckle pattern, the period of which will automatically match the cylinder lens array provided that the same lens array is used in the transmitter and receiver part of the device.

The Fourier transform of this speckle pattern was calculated. This is equal to the speckle spectrum as discussed earlier, and is shown in Fig. 58.

According to these observations, the result of illuminating the object with a spatially divided beam will be increased signal strength and a down-grading of the system to a Class 1 laser system despite the fact that the total emitted power exceeds the value relevant for a single-beam Class 1 device.

In figures 52 and 53, two embodiments of the detector means in the input device are schematically shown in a top view. As schematically shown fig. 52, the VCSEL 104 illuminates the spherical surface of the ball 102. The light emanating from the surface is then detected in the two sets of detection means 105 placed on each side of the ball 102. In fig. 53, a lens array or grating 106 is inserted between the VCSEL 104 and the surface 102. The light emanating from the surface 102 is then detected in the CMOS arrays on each side of the portion of the surface 102 which is illuminated (CMOS: Complementary Metal Oxide Semiconductor). When the grating period/lens array period equals the pitch of the CMOS array, the speckles will have a period that will match the CMOS array (see also fig. 61). By the invention, it is realised that the light source may be other types of light sources than the VCSEL or similar laser types described herein. Accordingly, it is realised that also e.g. light-emitting diodes (LEDs) may be used.

Turning to fig. 59, a VCSEL 104 is positioned substantially in the same plane as the detection elements of the detection means 105. The emitted light is passed through an optical member 107 comprising a collimating lens portion and an array of lenses downstream therefrom, said lens array having an array pitch $\Lambda_0$ and scatters a "fan" consisting of a number of beams (only three beams are shown) corresponding to the number of illuminated lenslets in the array and their numerical apertures. In a two dimensional set-up, these beams project an array of illuminated spots on the surface (not shown), which is positioned in the distance *L* from the lenslets in the optical member 107. The spot distance is given by: $\Lambda_l = \lambda L/\Lambda_0$. The light emanating from these spots is detected in the detectors 105 behind the optical member 107. Hereby, the laser safety is improved as the power in each of the illuminating beams in Fig. 59 is below the accepted level for a Class 1 system. This reduces the overall impact on the potentially damaging radiation exposure and consequently also improves the laser safety of the input device. Moreover, this particular use of the optical member allows for a particularly compact design of the detection means of the input device.

The use of a common optical element in the transmitter and receiver part of the optical system may increase the amount of stray light scattered back from the emitted light by the optical member directly to the detectors. This stray light will increase the noise level and should be avoided by inserting absorbing screens between the transmitter- and detector paths. This is known art.

In figure 61, a detection system is shown, which is based on an existing CMOS array, but where the emitted beam is split into several beams, whereby the laser safety is improved and the speckles obtain a structure, which matches the CMOS array 105. The signal processing could be carried out by coupling of columns and rows of the CMOS array in a suitable manner and make a zero-crossing and quadrature detection. The light that is emitted from a VCSEL passes through a lens and downstream from said lens through a lens array or a grating to form spots on the surface to be detected. These spots illuminate the surface and the scattered filed giving rise to speckles are detected in the CMOS array. The pitch of the grating/lens array must be regulated so that the intensity distribution on the surface to create a spectrum for the speckles on the detector array (the CMOS array) which is such that the signal strength is optimised, whereby signal processing algorithm is simplified and the movement determination thereby optimised.

In figures 62 and 63, a variant to the embodiment of fig. 52 is shown. According to figs. 62 and 63 three sets of detectors 105 and associated optical elements are positioned with a mutual angle of 120°. Hereby, the velocity of the surface movement may be determined in three different directions in each of the sets of detectors, and the velocities $V_1$, $V_2$, $V_3$ may be calculated, as described in fig. 63. Hereby, the velocity in the x-direction and the y-direction as well as the twisting, i.e. in the φ-direction may be calculated in a rapid manner, as shown in fig. 63.

An alternative solution is shown in figures 64 and 65, where four sets of detectors are equally distributed around the light source, e.g. the VCSEL. In this set-up, the velocities in the x-direction, the y-direction and the twist (the φ-direction) may be calculated based on the velocities detected in each of the detector sets. This calculation does not require an extensive computing power in order to be carried out quickly.

By the invention, it is realised that the input device may be a separate unit or integrated in a product for controlling by screen navigation with a visual feedback to the user or at least integrated with other auxiliary products for controlling a computer product for controlling said product by amongst other things screen navigation.

## Claims

1. An input device (100) for screen navigation, such as cursor control on a computer screen, said input device (100) comprising a housing (101) and optical detection means (103) for detecting the movement of a surface, said optical detection means (103) comprising

at least one set of detector means (105) for detection of relative displacement of the surface and the input device (100) in at least one direction of movement by imaging an input plane (14), said input plane (14) receiving light emanating from the surface, said set of detector means (105) defining an output plane (15), **characterised in that** the optical detection means (103) comprises
at least one substantially coherent light source (104) positioned in the housing (101) substantially in the same plane, the output plane (15), as the detection means (105), said light source (104) illuminating at least a part of the surface, and
an optical member (107) including at least three optical elements (18) for mapping of different specific first areas on the input plane (14) onto substantially the same second area on the output plane (15), thereby generating an oscillating optical signal from the surface movement in at least one of the first and second areas.

2. An input device (100) according to claim 1, wherein the input device (100) comprises at least two sets of optical detection means (103) for detecting movement in two, preferably perpendicular, directions.

3. An input device (100) according to claim 1 or 2, wherein each set of detection means (103) comprises two or more detector elements (105).

4. An input device (100) according to any of claims 1 to 3, wherein the input device (100) comprises three or four sets of detection means (103) for detecting movement in three directions, whereby both linear movement in two directions and twisting of the surface relative to the input device (100) may be detected.

5. An input device (100) according to any of claims 1 to 4, wherein the optical elements (18) are lenses.

6. An input device (100) according to claim 5, wherein the optical elements (18) are cylindrical lenses.

7. An input device (100) according to claim 5, wherein the optical elements (18) are spherical lenses.

8. An input device (100) according to claim 5, wherein the optical elements (18) are Fresnel lenses.

9. An input device (100) according to claim 5, wherein the optical elements (18) are formed by linear phase grating with sinusoidal modulation of substrate thickness.

10. An input device (100) according to any of claims 1 to 5, wherein the optical elements (18) are prisms.

11. An input device (100) according to any of claims 1 to 5, wherein the optical elements (18) are prism stubs.

12. An input device (100) according to any of claims 1 to 5, wherein the optical member (107) is a diffractive optical element.

13. An input device (100) according to any of the preceding claims, wherein the optical elements (18) reflect light.

14. An input device (100) according to any of the preceding claims, wherein the optical member (107) includes a linear array (12) of optical elements (18) arranged in an array of lenses extending substantially perpendicular to the emitted light beam(s).

15. An input device (100) according to any of the preceding claims, wherein the optical member (107) include a two-dimensional array of lenses.

16. An input device (100) according to any of the preceding claims, wherein one light source illuminates a portion of the surface.

17. An input device (100) according to any of the preceding claims, wherein the detection means (103) comprises an input plane (14) for reception of light emanating from the object, and wherein the optical member (107) is adapted to direct light emanating from different parts of the input plane (14) in substantially the same direction by corresponding elements of the optical member (107).

18. An input device (100) according to claim 17, wherein the detection means (103) comprises an imaging system for imaging part of the input plane (14) onto at least one first detector element (105).

19. An input device (100) according to claim 18, wherein the optical member (107) and the imaging system are merged into a single physical component.

20. An input device (100) according to any of claims 17 to 19, wherein the detection means (103) further comprises a Fourier transforming lens that is positioned between the object and the input plane (14) in such a way that the object is positioned at the Fournier plan of the Fourier transforming lens whereby rotational displacement of the surface can be determined.

21. An input device (100) according to any of claims 17 to 20, wherein the substantially coherent radiation is emitted by the light source (104) through the optical member (107) onto the surface and reflected through the same physical component constituting the optical member (107).

22. An input device (100) according to any of claims 17 to 20, wherein two light sources (104) emit substantially coherent radiation each through an associated optical member corresponding to detection of movement in different directions.

23. An input device (100) according to any of claims 17 to 21, wherein the two optical members (107) are cross-orientated optical grid elements.

24. An input device (100) according to any of claims 17 to 23, wherein the detection means (103) further comprising a second imaging system that is positioned between the object and the input plane (14) and forming an image at the input plane of the surface.

25. An input device (100) according to any of claims 17 to 24, wherein the surface is illuminated by a divergent beam of light emitted by the light source positioned substantially at the input plane (14).

26. An input device (100) according to any of claims 17 to 25, wherein a collimated beam of light illuminates a portion of the surface.

27. An input device (100) according to any of claims 17 to 26, wherein the average size of speckles formed on the input plane (14) is substantially identical to the size of an individual optical element (18).

28. An input device (100) according to any of claims 17 to 26, wherein the detection means (103) further comprises a collimated light source for illuminating the optical member (107) and an imaging system for imaging the optical member (107) onto the surface thereby forming a fringe pattern.

29. An input device (100) according to any of claims 1 to 27, wherein the width of the first optical detector elements is selected for optimum suppression of the third harmonic of the fundamental frequency of the detector signal.

30. An input device (100) according to any of claims 1 to 27, wherein the detection means (103) comprises a first set of two matched first optical detector elements with a mutual distance corresponding to a phase shift of substantially 180 DEG .

31. An input device (100) according to claim 30, wherein the detection means (103) further comprises a second set of two matched first optical detector elements with a mutual distance corresponding to a phase shift of substantially 180 DEG , the two sets of detector elements having a mutual distance corresponding to a phase shift of substantially 60 DEG.

32. An input device (100) according to claim 30, wherein the detection means further comprises a second set of two matched first optical detector elements with a mutual distance corresponding to a phase shift of substantially 180 DEG , the two sets of detector elements having a mutual distance corresponding to a phase shift of substantially 90 DEG.

33. An input device (100) according to any of claims 1 to 32, wherein the detection means (103) further comprises a second optical detector element that is displaced in relation to the at least one first optical detector elements for provision of an output signal that is statistically independent of the output signal of the at least one first optical detector elements whereby occurrence of signal drop out may be minimised.

34. An input device (100) according to any of the preceding claims, wherein the detection means (103) include an optical element and a further optical element downstream in the direction of the light emitted from the light source towards the surface to form spots on the surface, and that the back-scattered light spots are detected in a CMOS array.

**35.** An input device (100) according to claim 34, wherein said further optical element is a lens array.

**36.** An input device (100) according to claim 34, wherein said further optical element is a grating element.

**37.** An input device (100) according to claim 34, wherein the period of the further optical element matches the pitch of the CMOS array, so that the speckles will have a period that will match the CMOS array, i.e. has a period that is a multiplicity of the pitch of the period of the CMOS array.

**38.** An input device (100) according to any of the preceding claims, wherein the light source (104) is a VCSEL (Vertical Cavity Surface Emitting Laser-diode) having a wavelength of approx. 850 nm.

**39.** An input device (100) according to any of the preceding claims, wherein the light source (104) is a VCSEL having a wavelength between 400 to 700 nm.

**40.** An input device (100) according to any of the preceding claims, wherein the surface is a spherical or cylindrical surface of a rotating member mounted in a housing (101) of the input device (100).

**41.** An input device (100) according to claim 40, wherein a rotating member is protruding downwards from the housing (101) of the input device (100) when in use.

**42.** An input device (100) according to claim 41, wherein the housing (101) is an elongated, pen-like shaped housing.

**43.** An input device (100) according to claim 40, wherein the rotating member protruding upwards from the housing (101) of the input device (100) when in use.

**44.** An input device (100) according to any of claims 1 to 39, wherein the input device (100) detects the relative movement of a surface directly underneath the input device (100) when in use.

## Patentansprüche

**1.** Eingabevorrichtung (100) zur Bildschirmnavigation, wie eine Cursorsteuerung auf einem Computerbildschirm, wobei die Eingabevorrichtung (100) ein Gehäuse (101) und optische Erfassungsmittel (103) zum Erfassen der Bewegung einer Oberfläche aufweist, wobei die optischen Erfassungsmittel (103) aufweisen
mindestens einen Satz von Detektormitteln (105) zum Erfassen einer relativen Verschiebung der Oberfläche und der Eingabevorrichtung (100) in mindestens eine Bewegungsrichtung durch Abbilden einer Eingabeebene (14), wobei die Eingabeebene (14) von der Oberfläche ausgehendes Licht empfängt, wobei der Satz von Detektormitteln (105) eine Ausgabeebene (15) definiert,
**dadurch gekennzeichnet, dass**
die optischen Erfassungsmittel (103) aufweisen
mindestens eine im Wesentlichen kohärente Lichtquelle (104), die in dem Gehäuse (101) im Wesentlichen in der gleichen Ebene, der Ausgabeebene (15), wie die Erfassungsmittel (105) positioniert ist, wobei die Lichtquelle (104) zumindest einen Teil der Oberfläche beleuchtet, und
ein optisches Glied (107), das mindestens drei optische Elemente (18) zur Kartierung von verschiedenen spezifischen ersten Bereichen auf der Eingabeebene (14) auf im Wesentlichen den gleichen zweiten Bereich auf der Ausgabeebene (15) umfasst, wodurch in mindestens einem des ersten und des zweiten Bereichs ein schwingendes optisches Signal von der Oberflächenbewegung erzeugt wird.

**2.** Eingabevorrichtung (100) nach Anspruch 1, wobei die Eingabevorrichtung (100) mindestens zwei Sätze von optischen Erfassungsmitteln (103) zum Erfassen einer Bewegung in zwei, vorzugsweise senkrechte, Richtungen aufweist.

**3.** Eingabevorrichtung (100) nach Anspruch 1 oder 2, wobei jeder Satz von Erfassungsmitteln (103) zwei oder mehr Detektorelemente (105) aufweist.

4. Eingabevorrichtung (100) nach einem der Ansprüche 1 bis 3, wobei die Eingabevorrichtung (100) drei oder vier Sätze von Erfassungsmitteln (103) zum Erfassen einer Bewegung in drei Richtungen aufweist, wodurch sowohl eine lineare Bewegung in zwei Richtungen als auch ein Drehen der Oberfläche relativ zu der Eingabevorrichtung (100) erfasst werden können.

5. Eingabevorrichtung (100) nach einem der Ansprüche 1 bis 4, wobei die optischen Elemente (18) Linsen sind.

6. Eingabevorrichtung (100) nach Anspruch 5, wobei die optischen Elemente (18) zylindrische Linsen sind.

7. Eingabevorrichtung (100) nach Anspruch 5, wobei die optischen Elemente (18) sphärische Linsen sind.

8. Eingabevorrichtung (100) nach Anspruch 5, wobei die optischen Elemente (18) Fresnel-Linsen sind.

9. Eingabevorrichtung (100) nach Anspruch 5, wobei die optischen Elemente (18) durch ein lineares Phasengitter mit einer sinusförmigen Modulation der Substratdicke gebildet sind.

10. Eingabevorrichtung (100) nach einem der Ansprüche 1 bis 5, wobei die optischen Elemente (18) Prismen sind.

11. Eingabevorrichtung (100) nach einem der Ansprüche 1 bis 5, wobei die optischen Elemente (18) Prismenstümpfe sind.

12. Eingabevorrichtung (100) nach einem der Ansprüche 1 bis 5, wobei das optische Glied (107) ein beugendes optisches Element ist.

13. Eingabevorrichtung (100) nach einem der vorstehenden Ansprüche, wobei die optischen Elemente (18) Licht reflektieren.

14. Eingabevorrichtung (100) nach einem der vorstehenden Ansprüche, wobei das optische Glied (107) eine lineare Anordnung (12) von optischen Elementen (18) aufweist, die in einer Anordnung von Linsen angeordnet sind, die sich im Wesentlichen senkrecht zu dem (den) ausgestrahlten Lichtstrahl(en) erstrecken.

15. Eingabevorrichtung (100) nach einem der vorstehenden Ansprüche, wobei das optische Glied (107) eine zweidimensionale Anordnung von Linsen umfasst.

16. Eingabevorrichtung (100) nach einem der vorstehenden Ansprüche, wobei eine Lichtquelle einen Teil der Oberfläche beleuchtet.

17. Eingabevorrichtung (100) nach einem der vorstehenden Ansprüche, wobei die Erfassungsmittel (103) eine Eingabeebene (14) zum Empfangen von von dem Objekt ausgestrahlten Licht aufweisen, und wobei das optische Glied (107) dazu geeignet ist, Licht, das von verschiedenen Teilen der Eingabeebene (14) ausgeht, durch entsprechende Elemente des optischen Glieds (107) im Wesentlichen in die gleiche Richtung zu lenken.

18. Eingabevorrichtung (100) nach Anspruch 17, wobei die Erfassungsmittel (103) ein Abbildungssystem zum Abbilden eines Teils der Eingabeebene (14) auf mindestens ein erstes Detektorelement (105) aufweist.

19. Eingabevorrichtung (100) nach Anspruch 18, wobei das optische Glied (107) und das Abbildungssystem zu einer einzigen physikalischen Komponente vermischt werden.

20. Eingabevorrichtung (100) nach einem der Ansprüche 17 bis 19, wobei die Erfassungsmittel (103) ferner eine Fourier-Transformationslinse aufweisen, die derart zwischen dem Objekt und der Eingabeebene (14) positioniert ist, dass das Objekt an der Fourier-Ebene der Fourier-Transformationslinse positioniert ist, wodurch eine drehende Verschiebung der Oberfläche bestimmt werden kann.

21. Eingabevorrichtung (100) nach einem der Ansprüche 17 bis 20, wobei die im Wesentlichen kohärente Strahlung von der Lichtquelle (104) durch das optische Glied (107) auf die Oberfläche ausgestrahlt und durch die gleiche physikalische Komponente, die das optische Glied (107) bildet, reflektiert wird.

22. Eingabevorrichtung (100) nach einem der Ansprüche 17 bis 20, wobei zwei Lichtquellen (104) jeweils durch ein zugeordnetes optisches Glied entsprechend der Erfassung der Bewegung in verschiedene Richtungen eine im Wesentlichen kohärente Strahlung ausstrahlen.

**23.** Eingabevorrichtung (100) nach einem der Ansprüche 17 bis 21, wobei die beiden optischen Glieder (107) gekreuzt ausgerichtete, optische Gitterelemente sind.

**24.** Eingabevorrichtung (100) nach einem der Ansprüche 17 bis 23, wobei die Erfassungsmittel (103) ferner ein zweites Abbildungssystem aufweisen, das zwischen dem Objekt und der Eingabeebene (14) positioniert ist und an der Eingabeebene der Oberfläche ein Bild bildet.

**25.** Eingabevorrichtung (100) nach einem der Ansprüche 17 bis 24, wobei die Oberfläche durch einen zerstreuenden Lichtstrahl beleuchtet wird, der von der im Wesentlichen an der Eingabeebene (14) positionierten Lichtquelle ausgestrahlt wird.

**26.** Eingabevorrichtung (100) nach einem der Ansprüche 17 bis 25, wobei ein kollimierter Lichtstrahl einen Abschnitt der Oberfläche beleuchtet.

**27.** Eingabevorrichtung (100) nach einem der Ansprüche 17 bis 26, wobei die durchschnittliche Größe von auf der Eingabeebene (14) gebildeten Flecken im Wesentlichen gleich der Größe eines einzelnen optischen Elements (18) ist.

**28.** Eingabevorrichtung (100) nach einem der Ansprüche 17 bis 26, wobei die Erfassungsmittel (103) ferner eine kollimierte Lichtquelle zum Beleuchten des optischen Glieds (107) und ein Abbildungssystem zum Abbilden des optischen Glieds (107) auf der Oberfläche aufweisen, wodurch sie ein Streifenbild bilden.

**29.** Eingabevorrichtung (100) nach einem der Ansprüche 1 bis 27, wobei die Breite des ersten optischen Detektorelements zur optimalen Unterdrückung der dritten Oberschwingung der Grundfrequenz des Detektorsignals ausgewählt ist.

**30.** Eingabevorrichtung (100) nach einem der Ansprüche 1 bis 27, wobei die Erfassungsmittel (103) einen ersten Satz von zwei aufeinander abgestimmten ersten optischen Detektorelementen mit einem Abstand zueinander aufweisen, der einer Phasenänderung von im Wesentlichen 180° entspricht.

**31.** Eingabevorrichtung (100) nach Anspruch 30, wobei die Erfassungsmittel (103) ferner einen zweiten Satz von zwei aufeinander abgestimmten ersten optischen Detektorelementen mit einem Abstand zueinander aufweisen, der einer Phasenänderung von im Wesentlichen 180° entspricht, wobei die beiden Sätze von Detektorelementen einen Abstand zueinander aufweisen, der einer Phasenänderung von im Wesentlichen 60° entspricht.

**32.** Eingabevorrichtung (100) nach Anspruch 30, wobei die Erfassungsmittel ferner einen zweiten Satz von zwei aufeinander abgestimmten ersten optischen Detektorelementen mit einem Abstand zueinander aufweisen, der einer Phasenänderung von im Wesentlichen 180° entspricht, wobei die beiden Sätze von Detektorelementen einen Abstand zueinander aufweisen, der einer Phasenänderung von im Wesentlichen 90° entspricht.

**33.** Eingabevorrichtung (100) nach einem der Ansprüche 1 bis 32, wobei die Erfassungsmittel (103) ferner ein zweites optisches Detektorelement aufweisen, das in Bezug auf das mindestens eine erste optische Detektorelement zum Bereitstellen eines Ausgangssignals verschoben wird, das statistisch von dem Ausgangssignal des mindestens einen ersten optischen Detektorelements unabhängig ist, wobei das Auftreten eines Signalausfalls minimiert werden kann.

**34.** Eingabevorrichtung (100) nach einem der vorstehenden Ansprüche, wobei die Erfassungsmittel (103) ein optisches Element und ein weiteres optisches Element stromabwärts in Richtung des von der Lichtquelle zur Oberfläche ausgestrahlten Lichts einschließen, um Flecken auf der Oberfläche zu bilden, und dass die rückgestreuten Lichtflecken in einer CMOS-Anordnung erfasst werden.

**35.** Eingabevorrichtung (100) nach Anspruch 34, wobei das weitere optische Element eine Linsenanordnung ist.

**36.** Eingabevorrichtung (100) nach Anspruch 34, wobei das weitere optische Element ein Gitterelement ist.

**37.** Eingabevorrichtung (100) nach Anspruch 34, wobei die Periode des weiteren optischen Elements auf den Abstand (Pitch) der CMOS-Anordnung abgestimmt ist, so dass die Flecken eine Periode haben, die auf die CMOS-Anordnung abgestimmt ist, d.h. dass sie eine Periode haben, die ein Vielfaches des Abstands (Pitch) der Periode der CMOS-Anordnung ist.

**38.** Eingabevorrichtung (100) nach einem der vorstehenden Ansprüche, wobei die Lichtquelle (104) eine VCSEL (Vertical Cavity Surface Emitting Laser Diode, oberflächenemittierende Laserdiode mit vertikaler Kavität) mit einer Wellenlänge von ungefähr 850 nm ist.

**39.** Eingabevorrichtung (100) nach einem der vorstehenden Ansprüche, wobei die Lichtquelle (104) eine VCSEL mit einer Wellenlänge von 400 bis 700 nm ist.

**40.** Eingabevorrichtung (100) nach einem der vorstehenden Ansprüche, wobei die Oberfläche eine sphärische oder zylindrische Oberfläche eines Drehglieds ist, das in einem Gehäuse (101) der Eingabevorrichtung (100) angebracht ist.

**41.** Eingabevorrichtung (100) nach Anspruch 40, wobei in Gebrauch ein Drehglied von dem Gehäuse (101) der Eingabevorrichtung (100) nach unten vorsteht.

**42.** Eingabevorrichtung (100) nach Anspruch 41, wobei das Gehäuse (101) ein längliches, stiftartig geformtes Gehäuse ist.

**43.** Eingabevorrichtung (100) nach Anspruch 40, wobei in Gebrauch das Drehglied von dem Gehäuse (101) der Eingabevorrichtung (100) nach oben vorsteht.

**44.** Eingabevorrichtung (100) nach einem der Ansprüche 1 bis 39, wobei die Eingabevorrichtung (100) in Gebrauch die relative Bewegung einer Oberfläche direkt unterhalb der Eingabevorrichtung (100) erfasst.

## Revendications

**1.** Dispositif d'entrée (100) pour la navigation sur écran, tel qu'une commande de curseur sur un écran d'ordinateur, ledit dispositif d'entrée (100) comprenant un boîtier (101) et des moyens de détection optique (103) pour détecter le mouvement d'une surface, lesdits moyens de détection optique (103) comprenant :

au moins un ensemble de moyens détecteurs (105) pour la détection du déplacement relatif de la surface et du dispositif d'entrée (100) dans au moins une direction de mouvement par formation d'image d'un plan d'entrée (14), ledit plan d'entrée (14) recevant de la lumière émanant de la surface, ledit ensemble de moyens détecteurs (105) définissant un plan de sortie (15),
**caractérisé en ce que**
les moyens de détection optique (103) comprennent
au moins une source de lumière sensiblement cohérente (104) positionnée dans le boîtier (101) sensiblement dans le même plan, le plan de sortie (15), que les moyens de détection (105), ladite source de lumière (104) illuminant au moins une partie de la surface, et
un organe optique (107) comprenant au moins trois éléments optiques (18) pour le mappage de différentes premières zones spécifiques sur le plan d'entrée (14) sensiblement sur la même deuxième zone sur le plan de sortie (15), en générant ainsi un signal optique oscillant à partir du mouvement de surface dans au moins une des premières et deuxièmes zones.

**2.** Dispositif d'entrée (100) selon la revendication 1, dans lequel le dispositif d'entrée (100) comprend au moins deux ensembles de moyens de détection optique (103) pour détecter un mouvement dans deux directions, de préférence perpendiculaires.

**3.** Dispositif d'entrée (100) selon la revendication 1 ou 2, dans lequel chaque ensemble de moyens de détection optique (103) comprend deux éléments détecteurs (105) ou plus.

**4.** Dispositif d'entrée (100) selon l'une quelconque des revendications 1 à 3, dans lequel le dispositif d'entrée (100) comprend trois ou quatre ensembles de moyens de détection (103) pour détecter un mouvement dans trois directions, moyennant quoi à la fois un mouvement linéaire dans deux directions et une torsion de la surface par rapport au dispositif d'entrée (100) peuvent être détectés.

**5.** Dispositif d'entrée (100) selon l'une quelconque des revendications 1 à 4, dans lequel les éléments optiques (18) sont des lentilles.

**6.** Dispositif d'entrée (100) selon la revendication 5, dans lequel les éléments optiques (18) sont des lentilles cylindriques.

**7.** Dispositif d'entrée (100) selon la revendication 5, dans lequel les éléments optiques (18) sont des lentilles sphériques.

**8.** Dispositif d'entrée (100) selon la revendication 5, dans lequel les éléments optiques (18) sont des lentilles de Fresnel.

**9.** Dispositif d'entrée (100) selon la revendication 5, dans lequel les éléments optiques (18) sont formés par des grilles de phase linéaire avec modulation sinusoïdale d'épaisseur de substrat.

**10.** Dispositif d'entrée (100) selon l'une quelconque des revendications 1 à 5, dans lequel les éléments optiques (18) sont des prismes.

**11.** Dispositif d'entrée (100) selon l'une quelconque des revendications 1 à 5, dans lequel les éléments optiques (18) sont des tronçons de prisme.

**12.** Dispositif d'entrée (100) selon l'une quelconque des revendications 1 à 5, dans lequel l'organe optique (107) est un élément optique diffractif.

**13.** Dispositif d'entrée (100) selon l'une quelconque des revendications précédentes, dans lequel les éléments optiques (18) réfléchissent la lumière.

**14.** Dispositif d'entrée (100) selon l'une quelconque des revendications précédentes, dans lequel l'organe optique (107) comprend un réseau linéaire (12) d'éléments optiques (18) agencés en un réseau de lentilles s'étendant sensiblement perpendiculairement au (x) faisceau(x) lumineux émis.

**15.** Dispositif d'entrée (100) selon l'une quelconque des revendications précédentes, dans lequel l'organe optique (107) comprend un réseau de lentilles en deux dimensions.

**16.** Dispositif d'entrée (100) selon l'une quelconque des revendications précédentes, dans lequel une source de lumière illumine une portion de la surface.

**17.** Dispositif d'entrée (100) selon l'une quelconque des revendications précédentes, dans lequel les moyens de détection (103) comprennent un plan d'entrée (14) pour la réception de lumière émanant de l'objet, et dans lequel l'organe optique (107) est adapté pour diriger la lumière émanant de différentes parties du plan d'entrée (14) sensiblement dans la même direction par des éléments correspondants de l'organe optique (107).

**18.** Dispositif d'entrée (100) selon la revendication 17, dans lequel les moyens de détection (103) comprennent un système d'imagerie pour former une image d'une partie du plan d'entrée (14) sur au moins un premier élément détecteur (105).

**19.** Dispositif d'entrée (100) selon la revendication 18, dans lequel l'organe optique (107) et le système d'imagerie sont fusionnés en un unique composant physique.

**20.** Dispositif d'entrée (100) selon l'une quelconque des revendications 17 à 19, dans lequel les moyens de détection (103) comprennent en outre une lentille de transformation de Fourier qui est positionnée entre l'objet et le plan d'entrée (14) de manière que l'objet soit positionné au niveau du plan de Fourier de la lentille de transformation de Fourier, moyennant quoi un déplacement de rotation de la surface peut être déterminé.

**21.** Dispositif d'entrée (100) selon l'une quelconque des revendications 17 à 20, dans lequel le rayonnement sensiblement cohérent est émis par la source de lumière (104) à travers l'organe optique (107) sur la surface et réfléchi à travers le même composant physique constituant l'organe optique (107).

**22.** Dispositif d'entrée (100) selon l'une quelconque des revendications 17 à 20, dans lequel deux sources de lumière (104) émettent un rayonnement sensiblement cohérent, chacune à travers un organe optique associé correspondant à la détection d'un mouvement dans des directions différentes.

**23.** Dispositif d'entrée (100) selon l'une quelconque des revendications 17 à 21, dans lequel les deux organes optiques (107) sont des éléments de grille optique orientés en croix.

**24.** Dispositif d'entrée (100) selon l'une quelconque des revendications 17 à 23, dans lequel les moyens de détection (103) comprennent en outre un deuxième système d'imagerie qui est positionné entre l'objet et le plan d'entrée (14) et formant une image au niveau du plan d'entrée de la surface.

**25.** Dispositif d'entrée (100) selon l'une quelconque des revendications 17 à 24, dans lequel la surface est illuminée par un faisceau lumineux divergent émis par la source de lumière positionnée sensiblement au niveau du plan d'entrée (14).

**26.** Dispositif d'entrée (100) selon l'une quelconque des revendications 17 à 25, dans lequel un faisceau lumineux collimaté illumine une portion de la surface.

**27.** Dispositif d'entrée (100) selon l'une quelconque des revendications 17 à 26, dans lequel la dimension moyenne de points formés sur le plan d'entrée (14) est sensiblement identique à la dimension d'un élément optique (18) individuel.

**28.** Dispositif d'entrée (100) selon l'une quelconque des revendications 17 à 26, dans lequel les moyens de détection (103) comprennent en outre une source de lumière collimatée pour illuminer l'organe optique (107) et un système d'imagerie pour former une image de l'organe optique (107) sur la surface, en formant ainsi un motif à franges.

**29.** Dispositif d'entrée (100) selon l'une quelconque des revendications 1 à 27, dans lequel la largeur des premiers éléments détecteurs optiques est sélectionnée pour une suppression optimale de la troisième harmonique de la fréquence fondamentale du signal de détecteur.

**30.** Dispositif d'entrée (100) selon l'une quelconque des revendications 1 à 27, dans lequel les moyens de détection (103) comprennent un premier ensemble de deux premiers éléments détecteurs optiques adaptés avec une distance mutuelle correspondant à un déphasage de sensiblement 180 degrés.

**31.** Dispositif d'entrée (100) selon la revendication 30, dans lequel les moyens de détection (103) comprennent en outre un deuxième ensemble de deux premiers éléments détecteurs adaptés avec une distance mutuelle correspondant à un déphasage de sensiblement 180 degrés, les deux ensembles d'éléments détecteurs optiques ayant une distance mutuelle correspondant à un déphasage de sensiblement 60 degrés.

**32.** Dispositif d'entrée (100) selon la revendication 30, dans lequel les moyens de détection comprennent en outre un deuxième ensemble de deux premiers éléments détecteurs optiques adaptés avec une distance mutuelle correspondant à un déphasage de sensiblement 180 degrés, les deux ensembles d'éléments détecteurs ayant une distance mutuelle correspondant à un déphasage de sensiblement 90 degrés.

**33.** Dispositif d'entrée (100) selon l'une quelconque des revendications 1 à 32, dans lequel les moyens de détection (103) comprennent en outre un deuxième élément détecteur optique qui est déplacé par rapport auxdits au moins un premiers éléments détecteurs optiques pour la fourniture d'un signal de sortie qui est sensiblement indépendant du signal de sortie desdits au moins un premiers éléments détecteurs optiques, moyennant quoi l'apparition d'une perte de signal peut être minimisée.

**34.** Dispositif d'entrée (100) selon l'une quelconque des revendications précédentes, dans lequel les moyens de détection (103) comprennent un élément optique et un autre élément optique en aval dans la direction de la lumière émise par la source de lumière vers la surface pour former des points sur la surface, et les points lumineux diffusés en retour sont détectés dans un réseau de CMOS.

**35.** Dispositif d'entrée (100) selon la revendication 34, dans lequel ledit autre élément optique est un réseau de lentilles.

**36.** Dispositif d'entrée (100) selon la revendication 34, dans lequel ledit autre élément optique est un élément à grille.

37. Dispositif d'entrée (100) selon la revendication 34, dans lequel la période de l'autre élément optique correspond au pas du réseau de CMOS, de manière que les points auront une période qui s'adaptera au réseau de CMOS, c'est-à-dire qu'ils ont une période qui est un multiple du pas de la période du réseau de CMOS.

38. Dispositif d'entrée (100) selon l'une quelconque des revendications précédentes, dans lequel la source de lumière (104) est un VCSEL (diode laser à cavité verticale et à émission par la surface) ayant une longueur d'onde d'environ 850 nm.

39. Dispositif d'entrée (100) selon l'une quelconque des revendications précédentes, dans lequel la source de lumière (104) est un VCSEL ayant une longueur d'onde entre 400 et 700 nm.

40. Dispositif d'entrée (100) selon l'une quelconque des revendications précédentes, dans lequel la surface est une surface sphérique ou cylindrique d'un organe rotatif monté dans un boîtier (101) du dispositif d'entrée (100).

41. Dispositif d'entrée (100) selon la revendication 40, dans lequel un élément rotatif fait saillie vers le bas à partir du boîtier (101) du dispositif d'entrée (100) quand il est utilisé.

42. Dispositif d'entrée (100) selon la revendication 41, dans lequel le boîtier (101) est un boîtier allongé en forme de stylo.

43. Dispositif d'entrée (100) selon la revendication 40, dans lequel l'élément rotatif fait saillie vers le haut à partir du boîtier (101) du dispositif d'entrée (100) quand il est utilisé.

44. Dispositif d'entrée (100) selon l'une quelconque des revendications 1 à 39, dans lequel le dispositif d'entrée (100) détecte le mouvement relatif d'une surface directement au-dessous du dispositif d'entrée (100) quand il est utilisé.

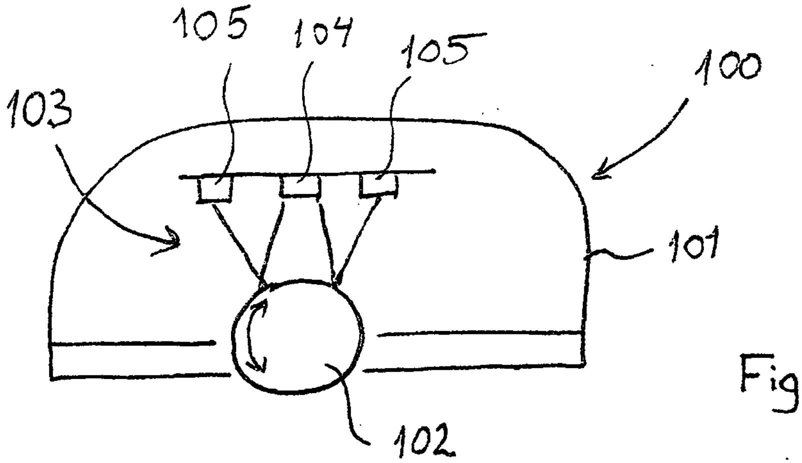


Fig. 1

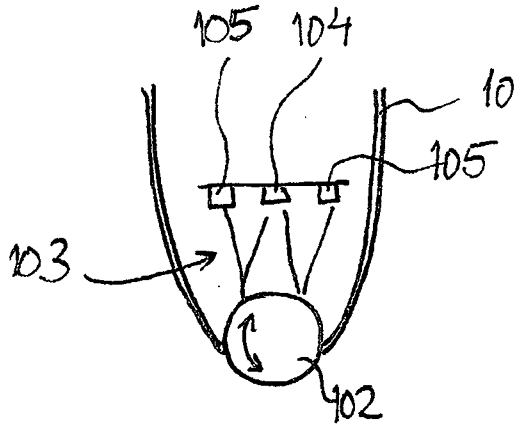


Fig. 2

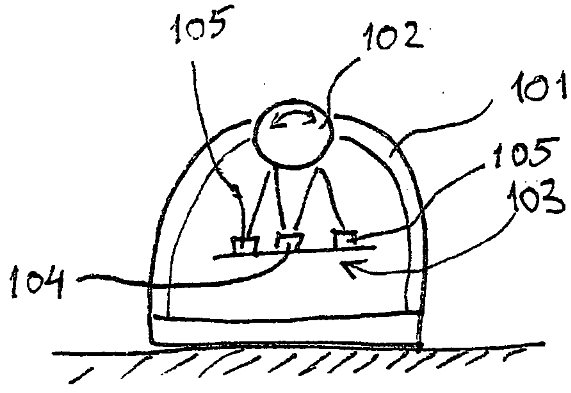


Fig. 3

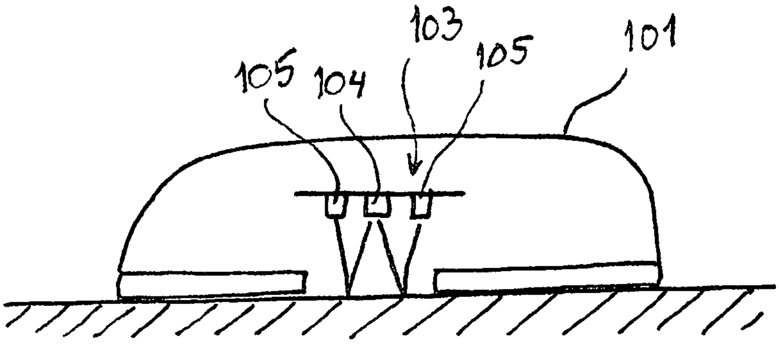


Fig. 4

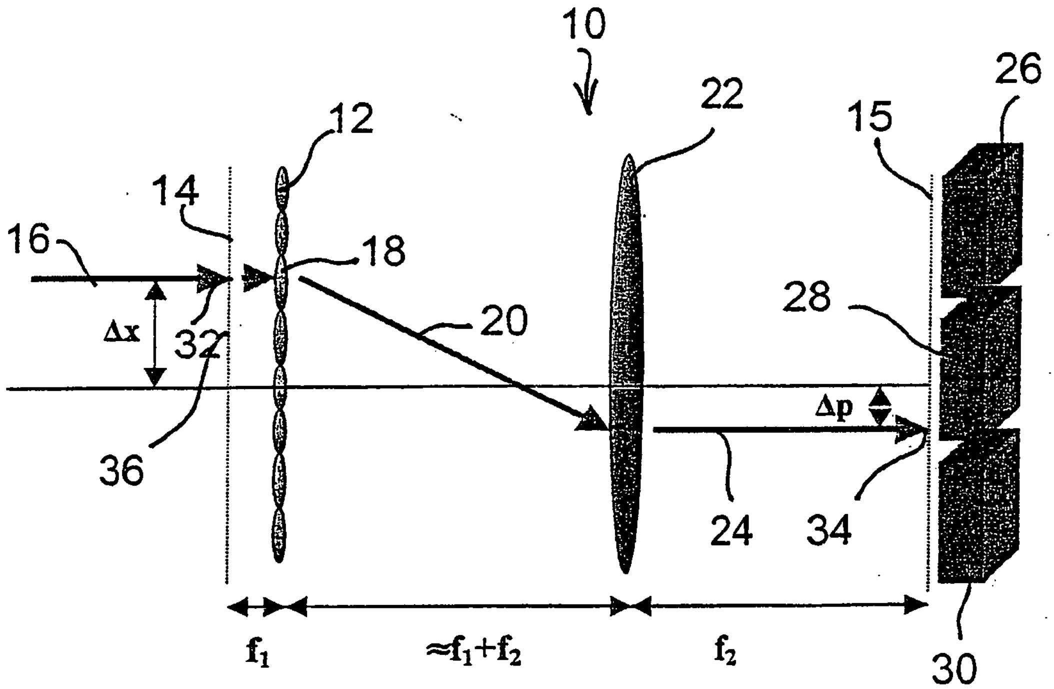


Fig. 5

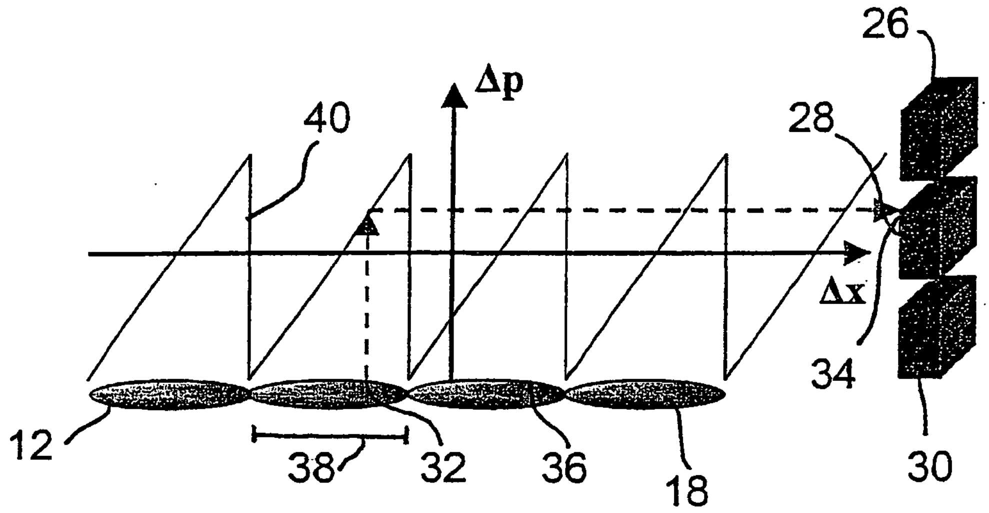


Fig. 6

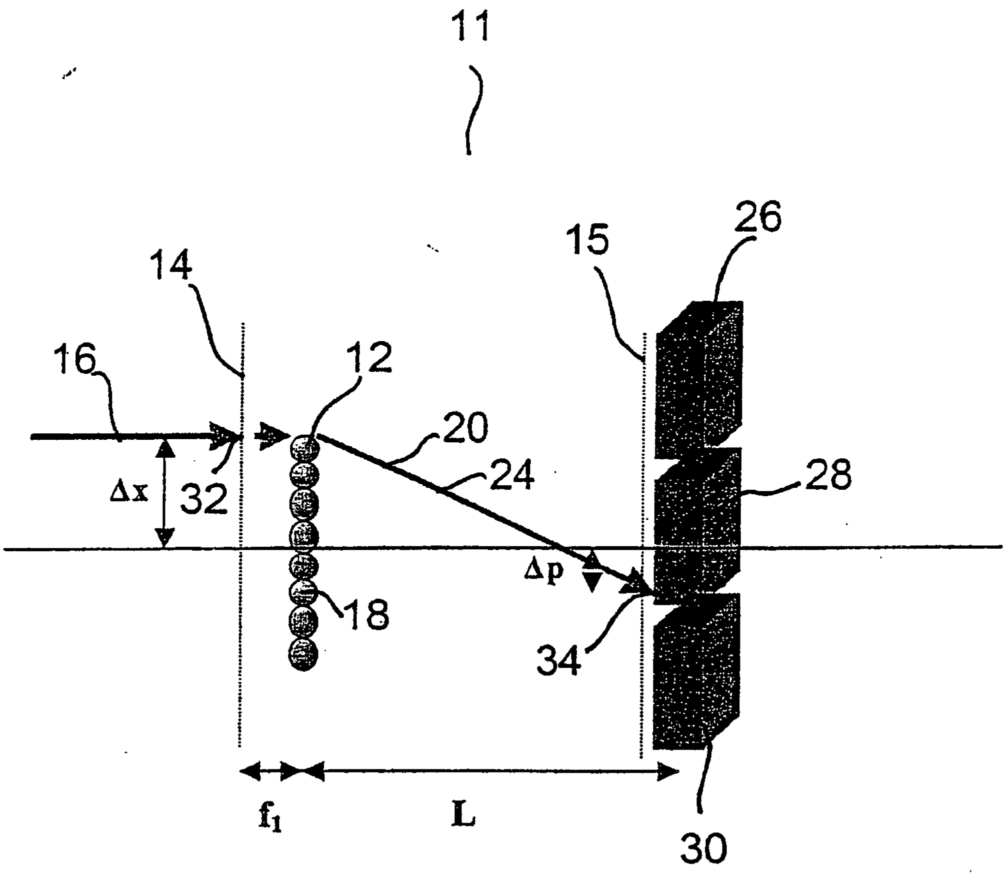


Fig. 7

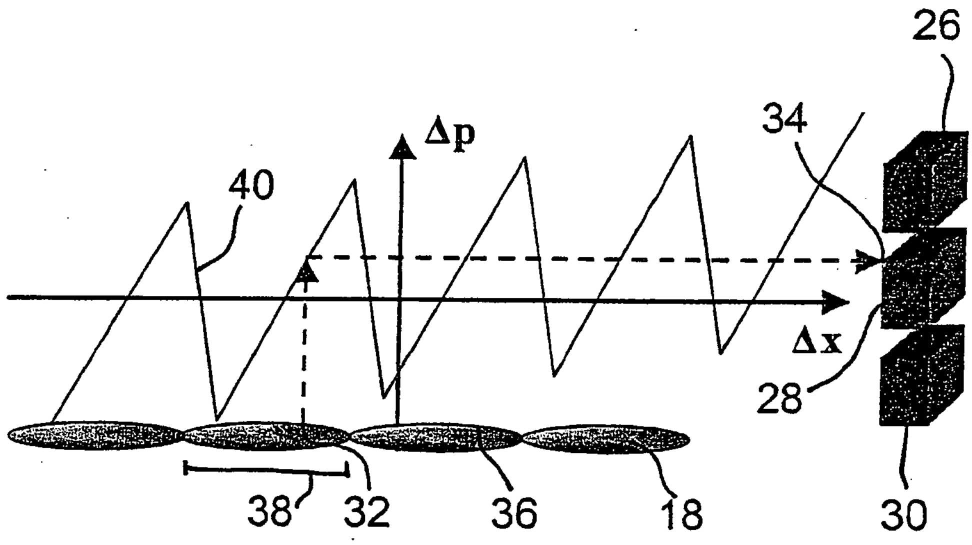


Fig. 8

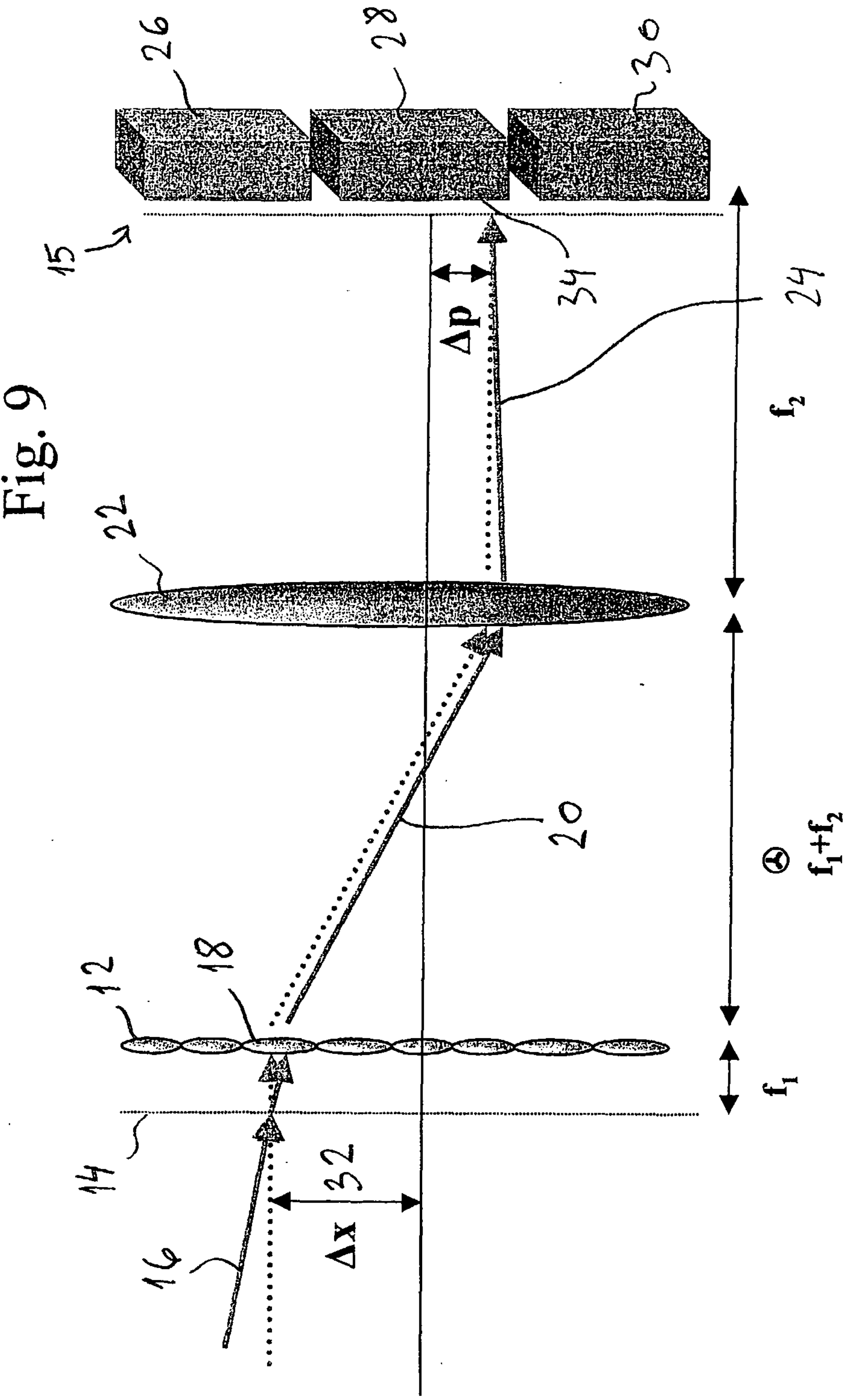


Fig. 9

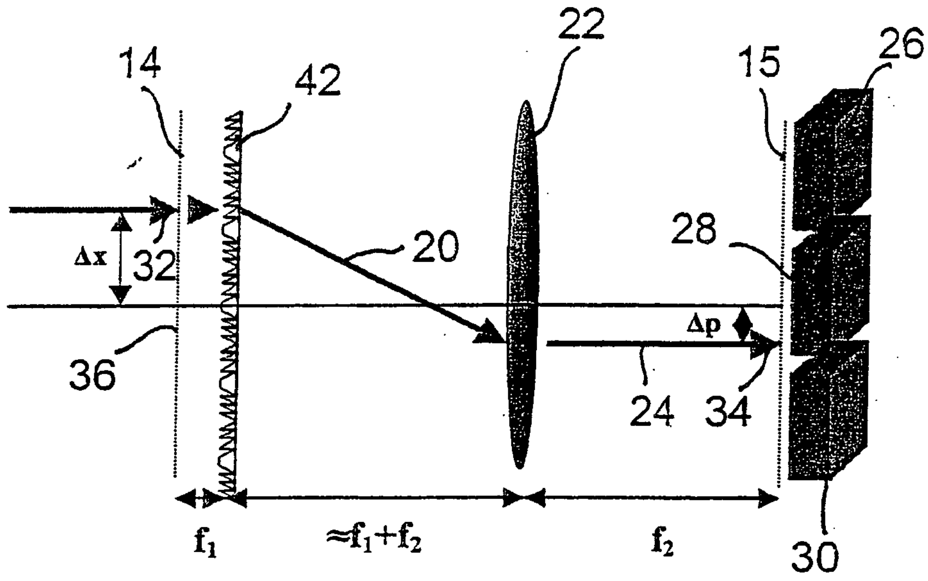


Fig. 10a

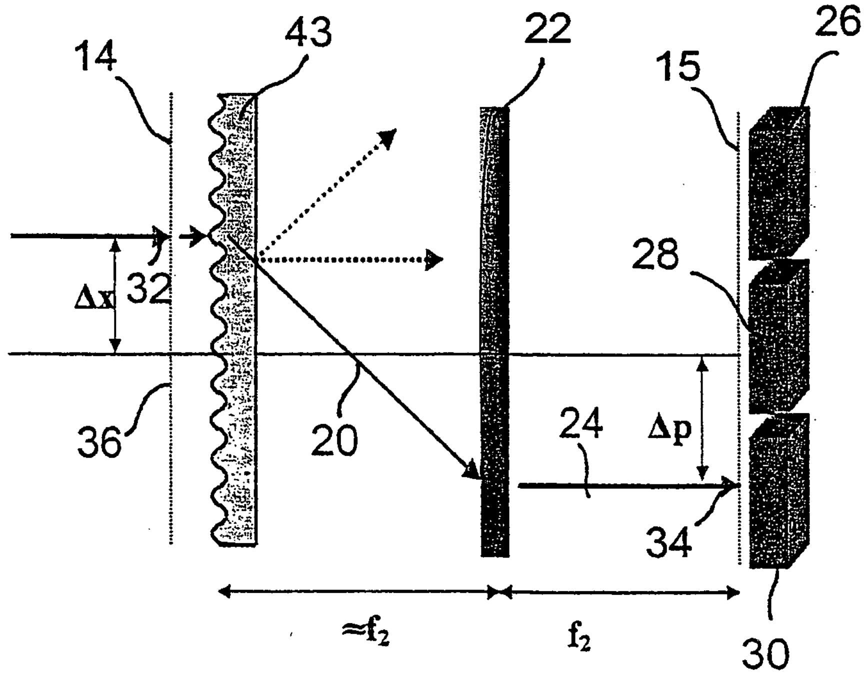


Fig. 10b

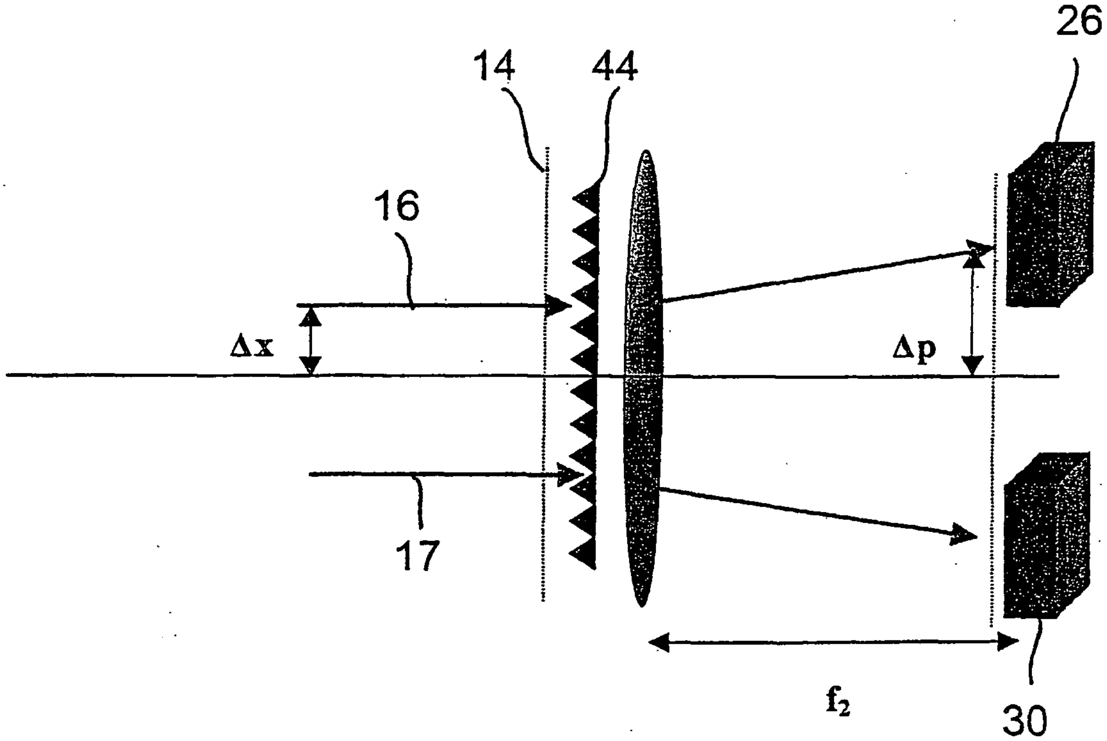


Fig. 11

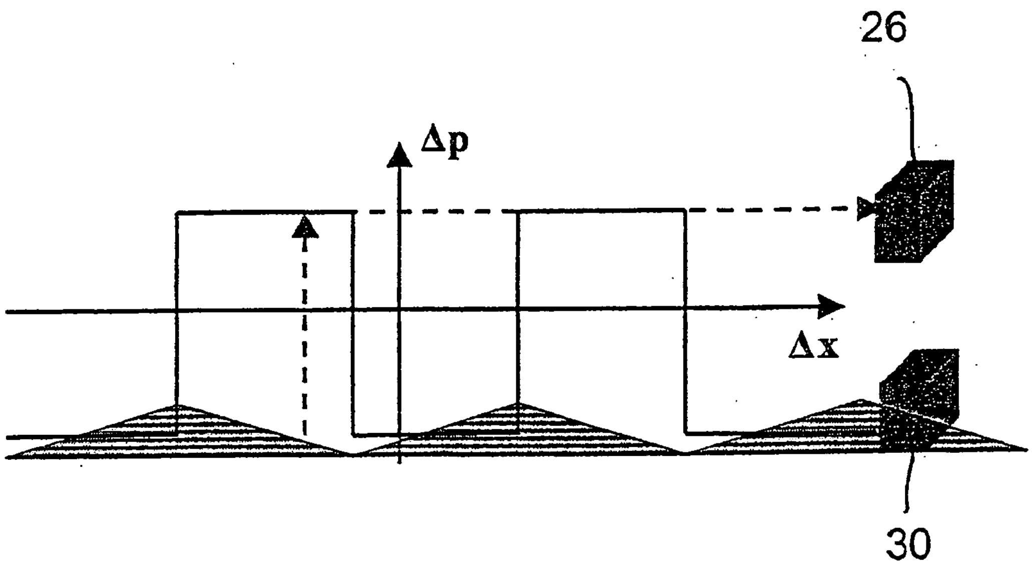


Fig. 12

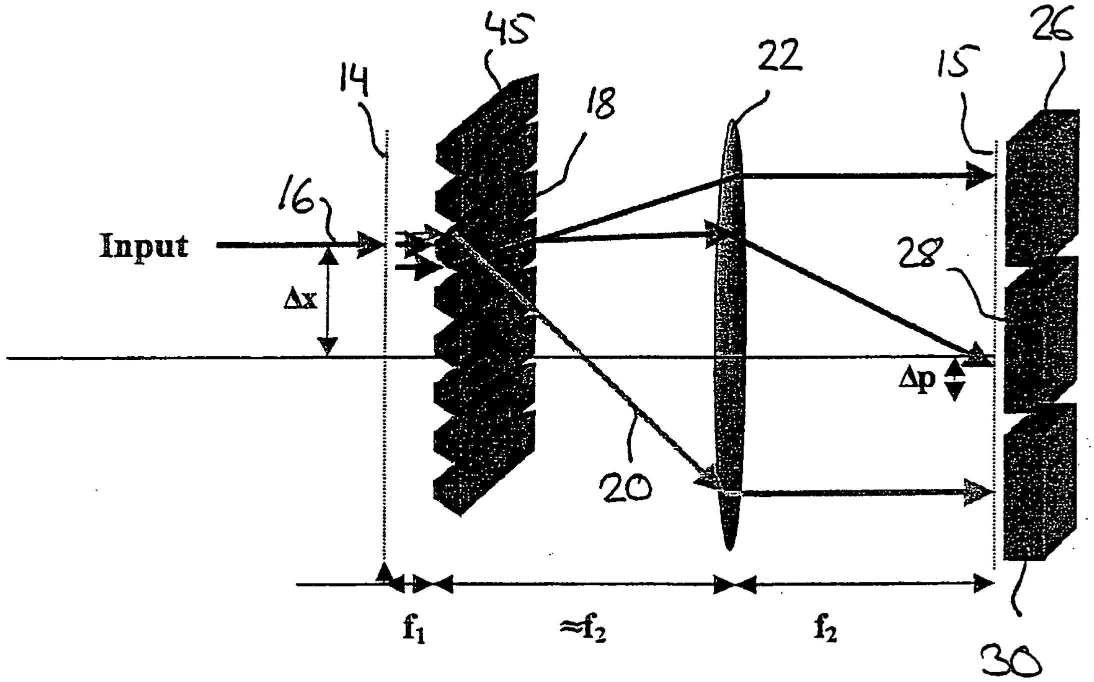


Fig. 13

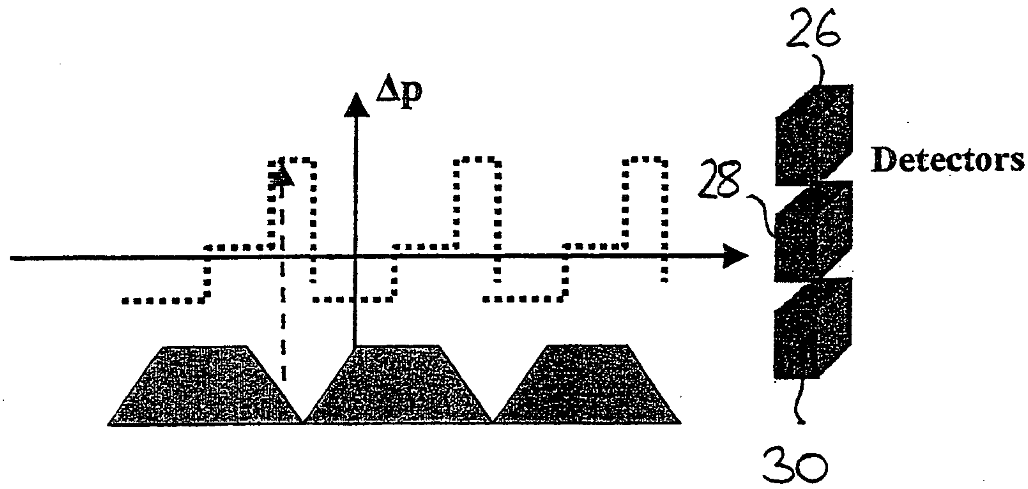


Fig. 14

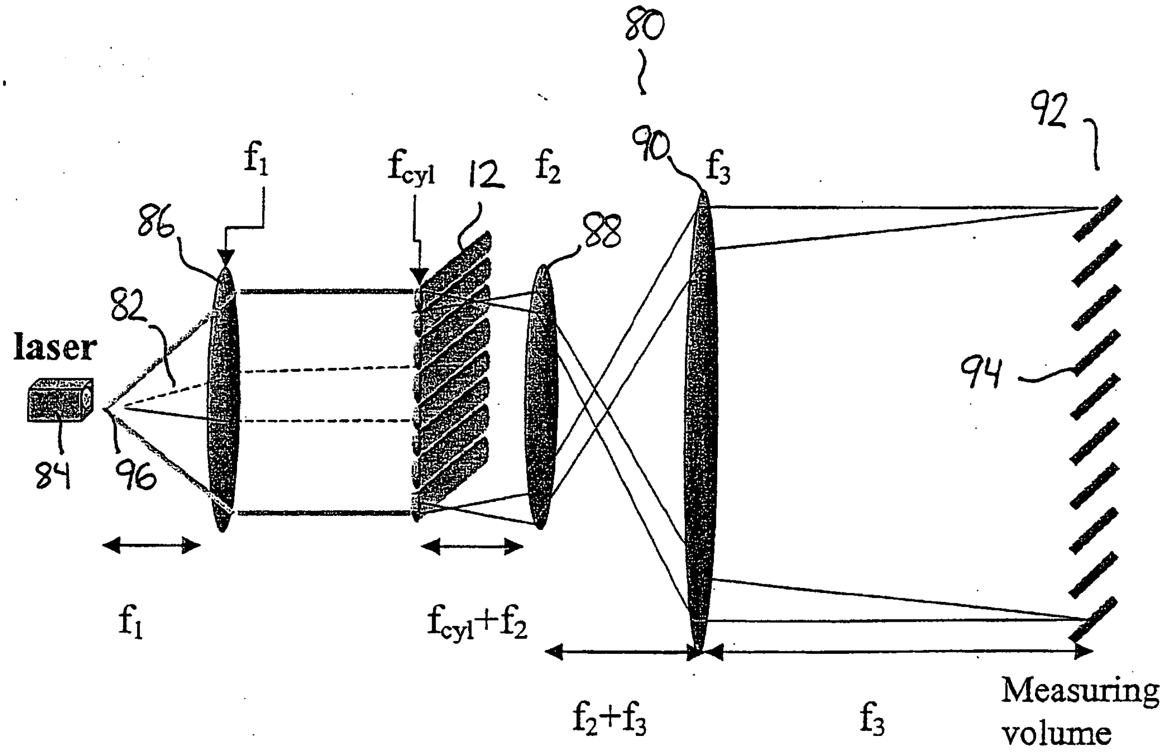
80
92
90
$f_3$
$f_1$
$f_{cyl}$
12
$f_2$
86
88
82
laser
94
84
96
$f_1$
$f_{cyl}+f_2$
$f_2+f_3$
$f_3$
Measuring volume

*Fig. 15*

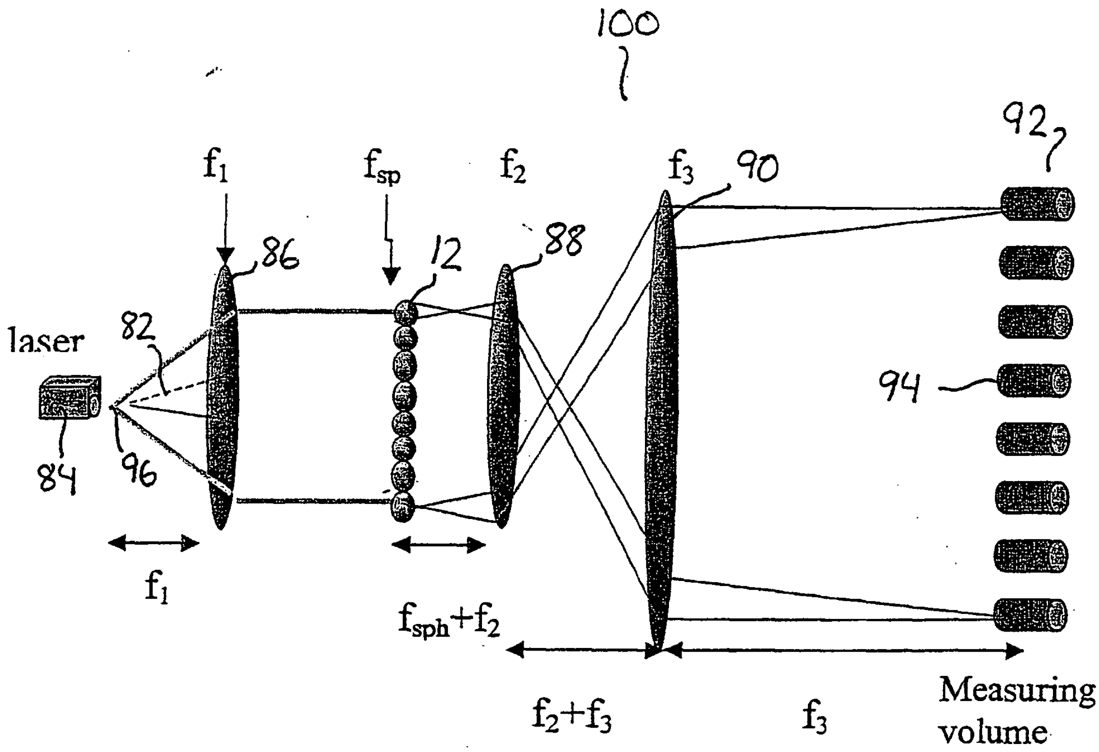
100
$f_1$
$f_{sp}$
$f_2$
$f_3$
90
92
86
12
88
laser
82
84
96
94
$f_1$
$f_{sph}+f_2$
$f_2+f_3$
$f_3$
Measuring volume

*Fig. 16*

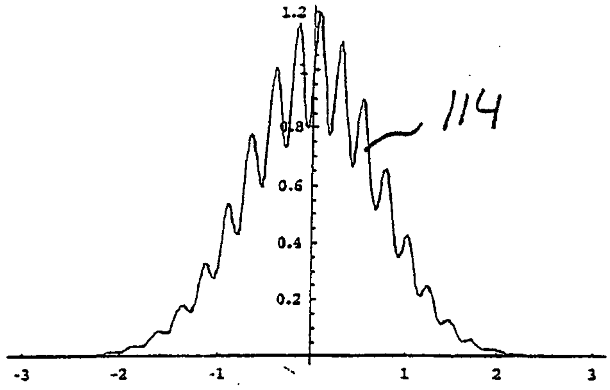


Fig. 18

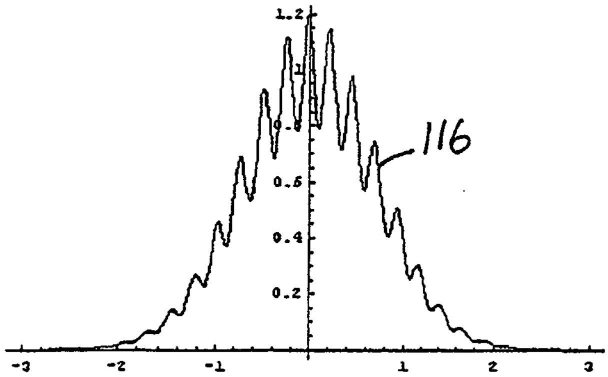


Fig. 19

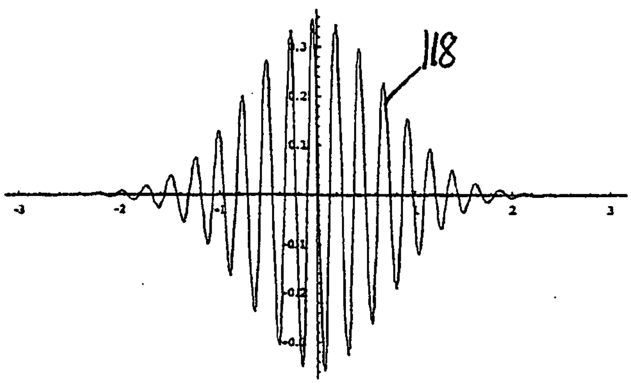


Fig. 20

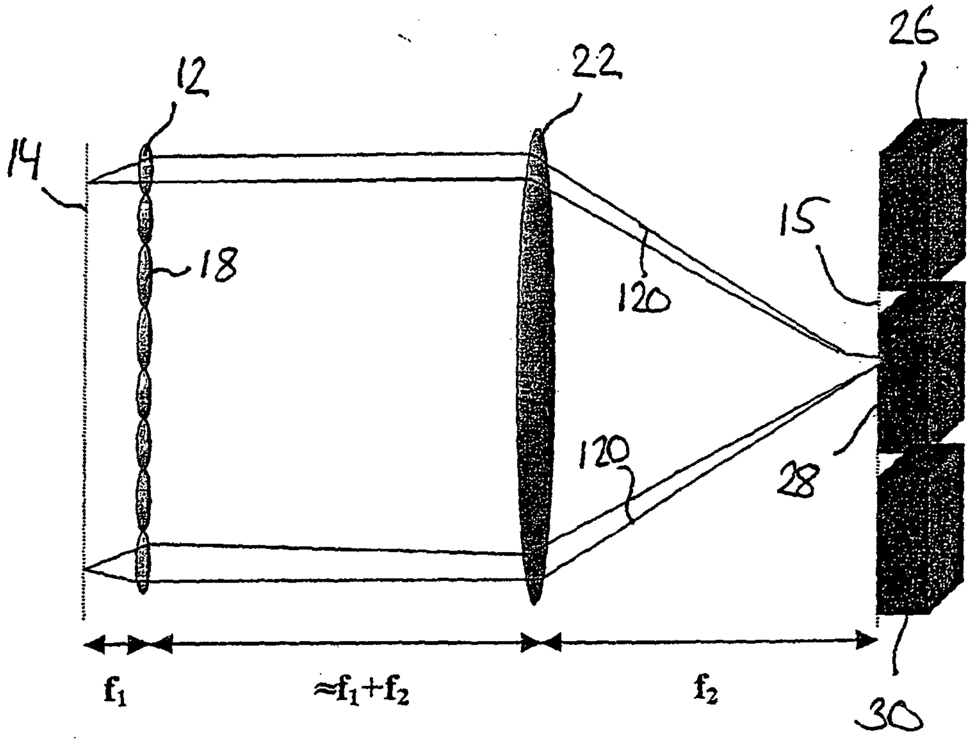


Fig. 21

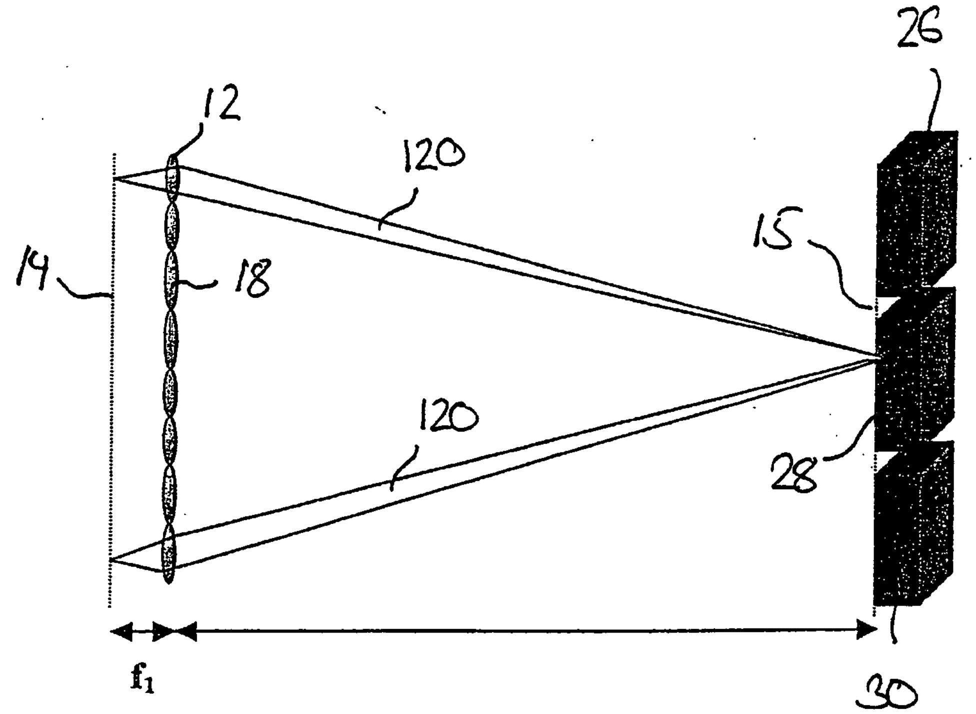


Fig. 22

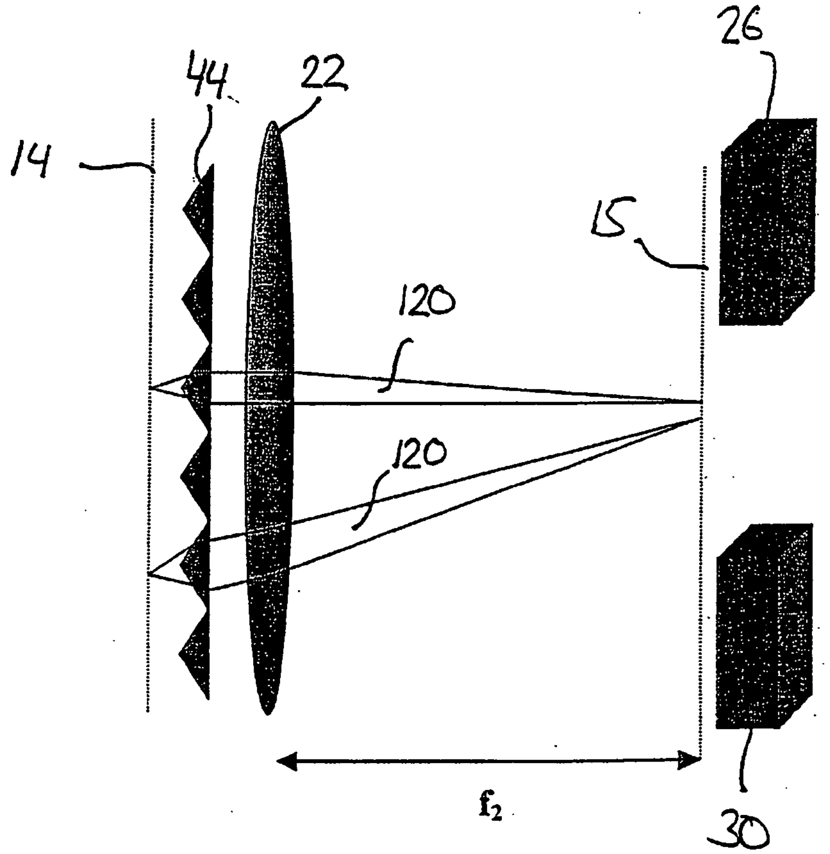


Fig. 23

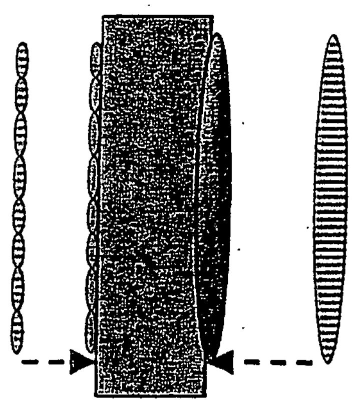

Fig. 24

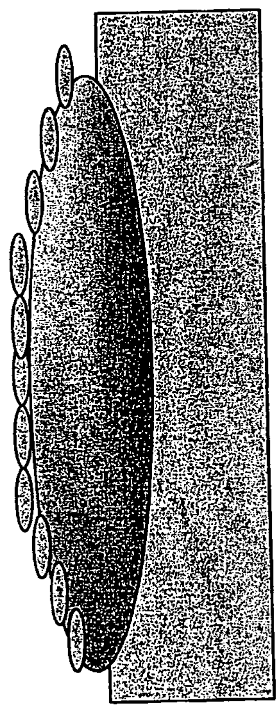

Fig. 25

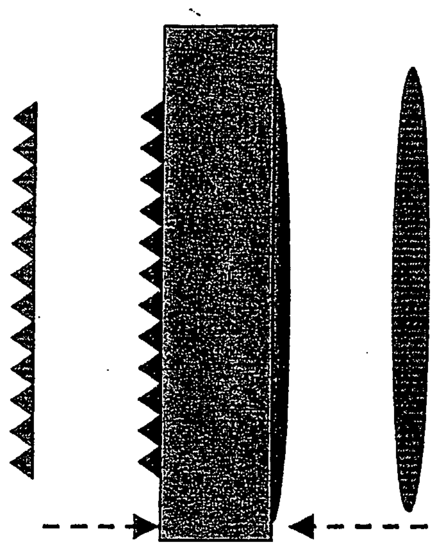

Fig. 26

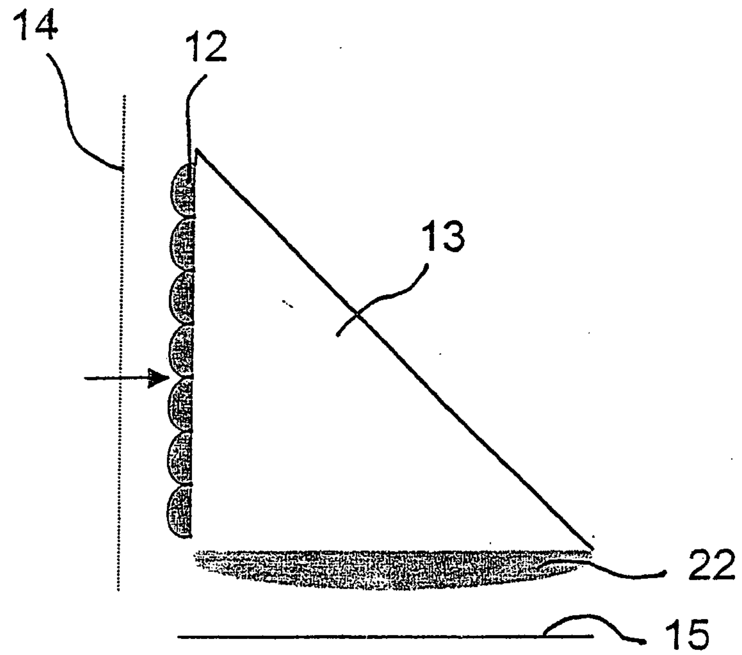


Fig. 27

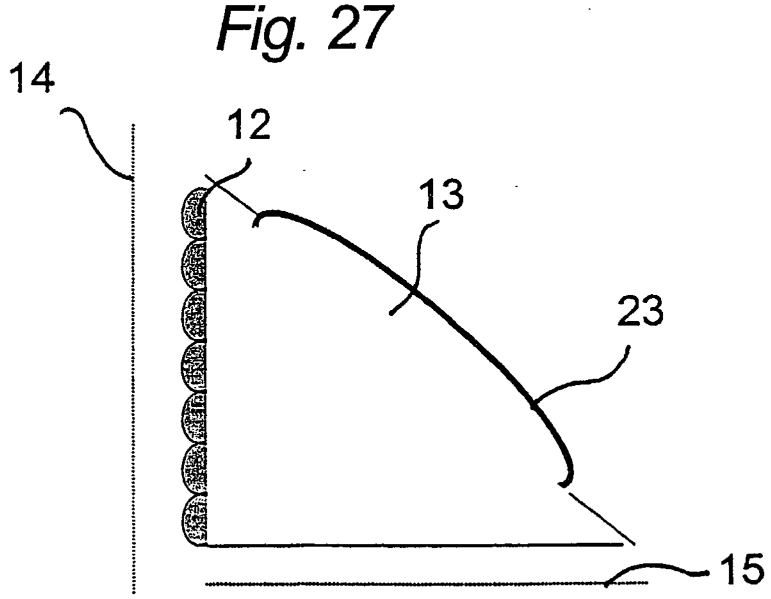


Fig. 28

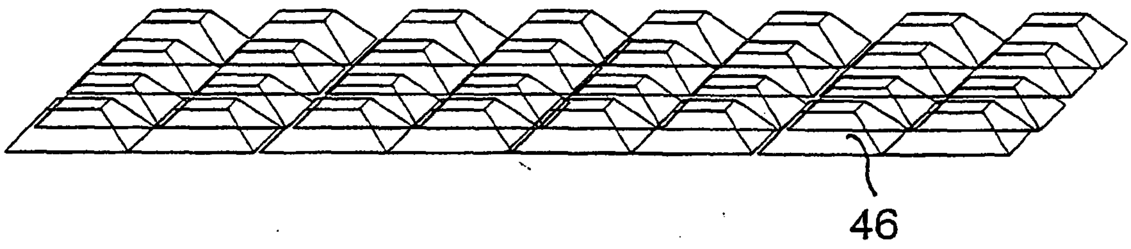


Fig. 29

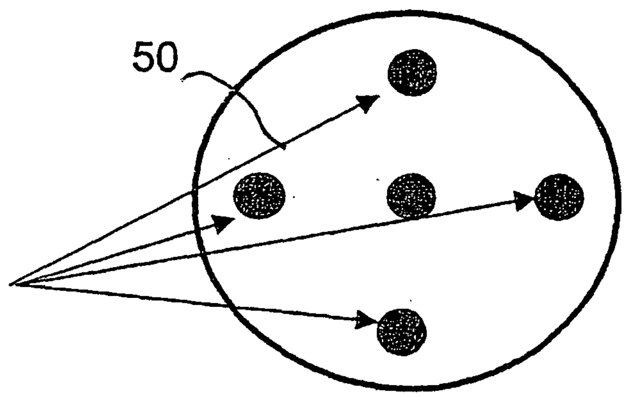


Fig. 30

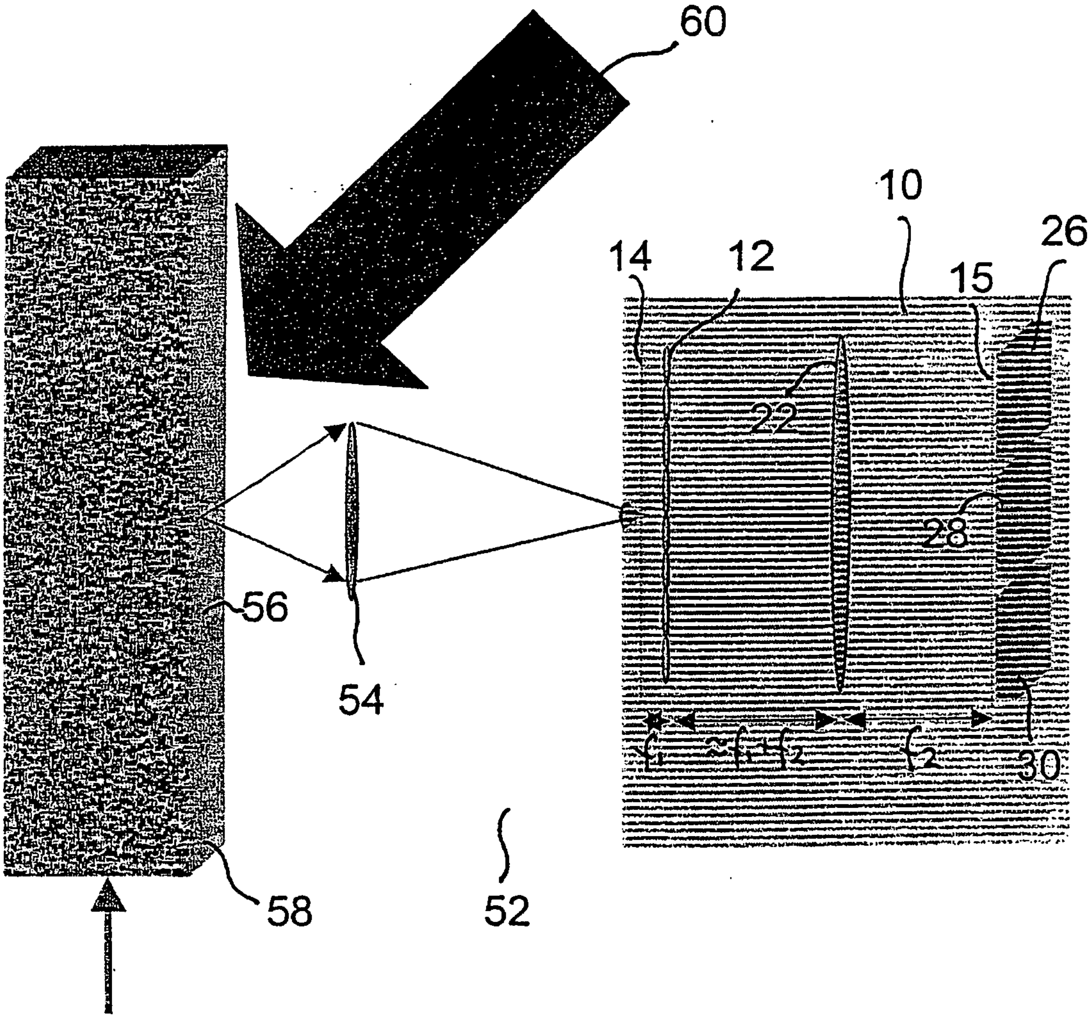


*Fig. 31*

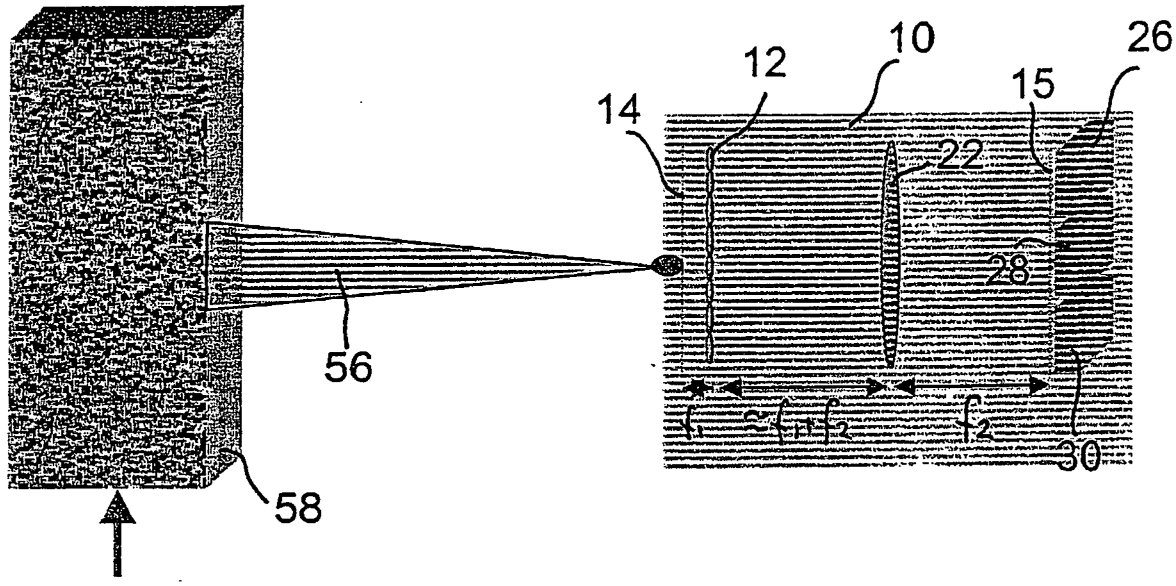


Fig. 32

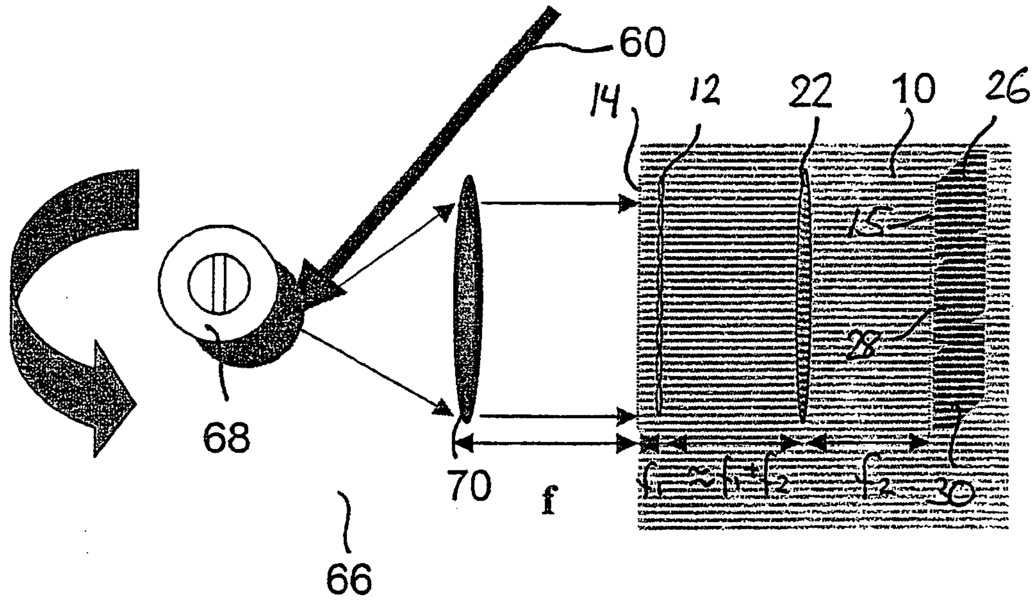


Fig. 33

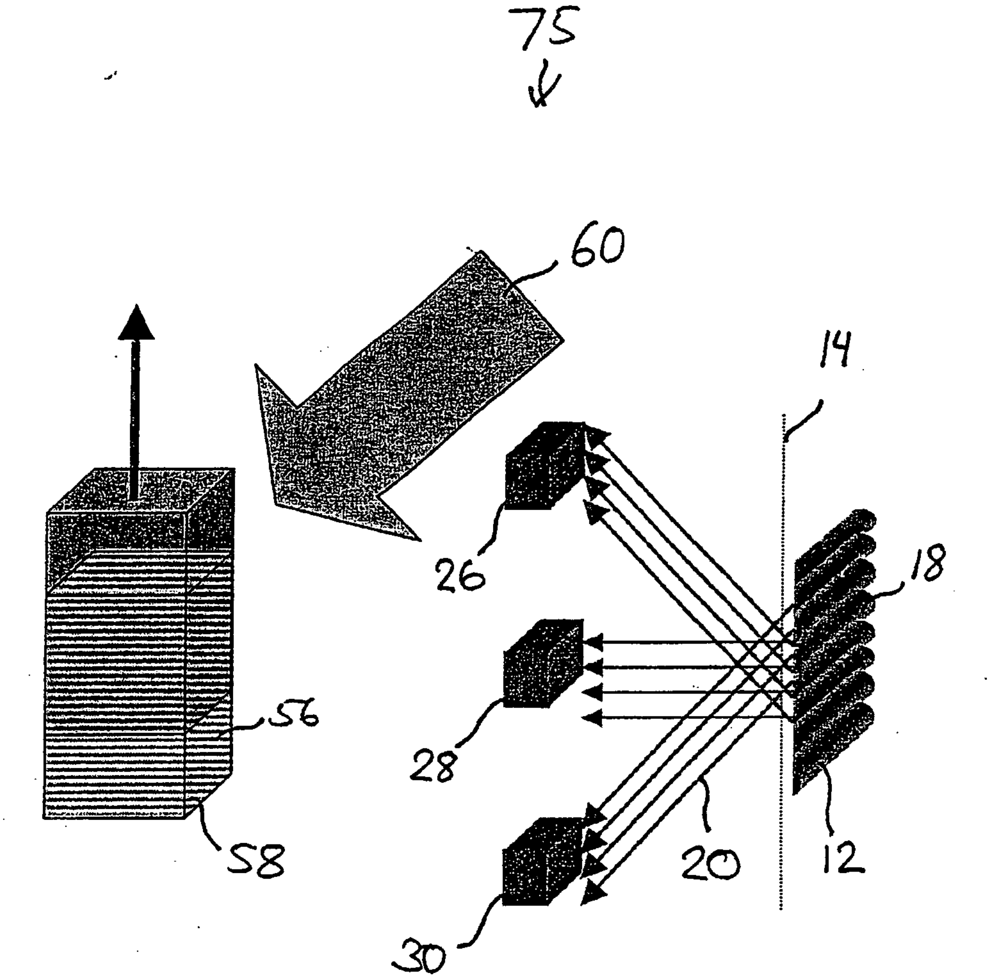


Fig. 34

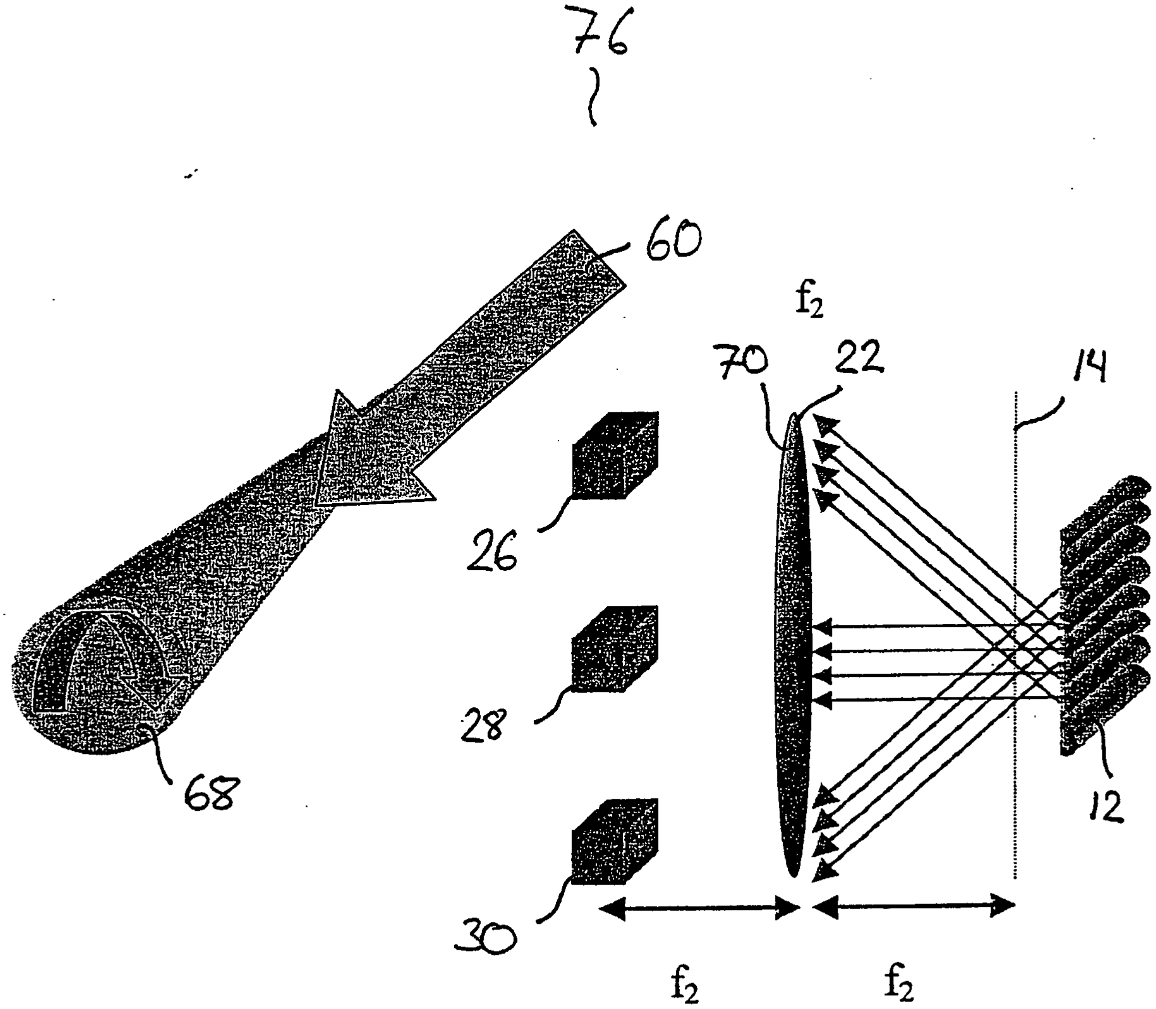


Fig. 35

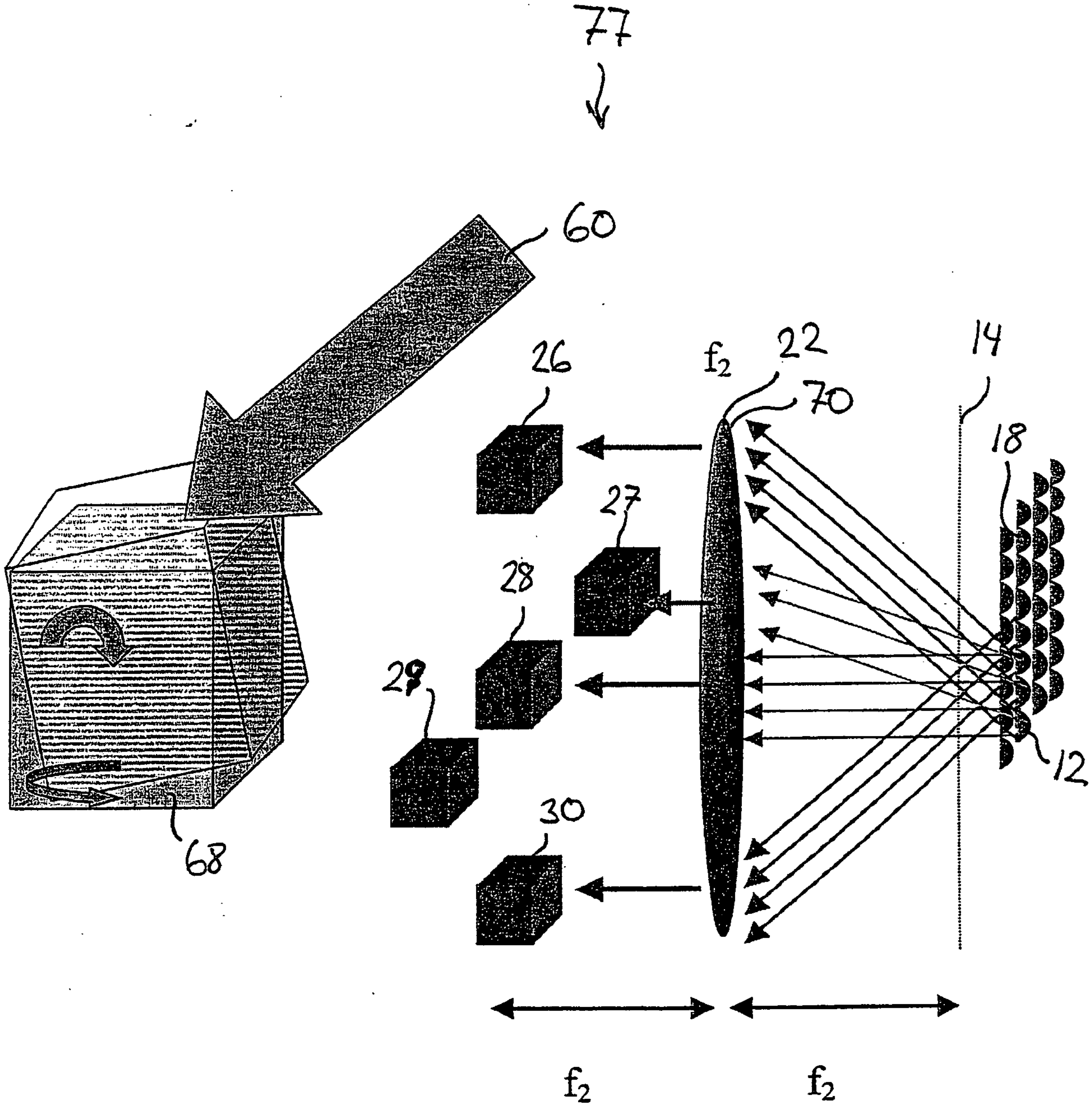


Fig. 36

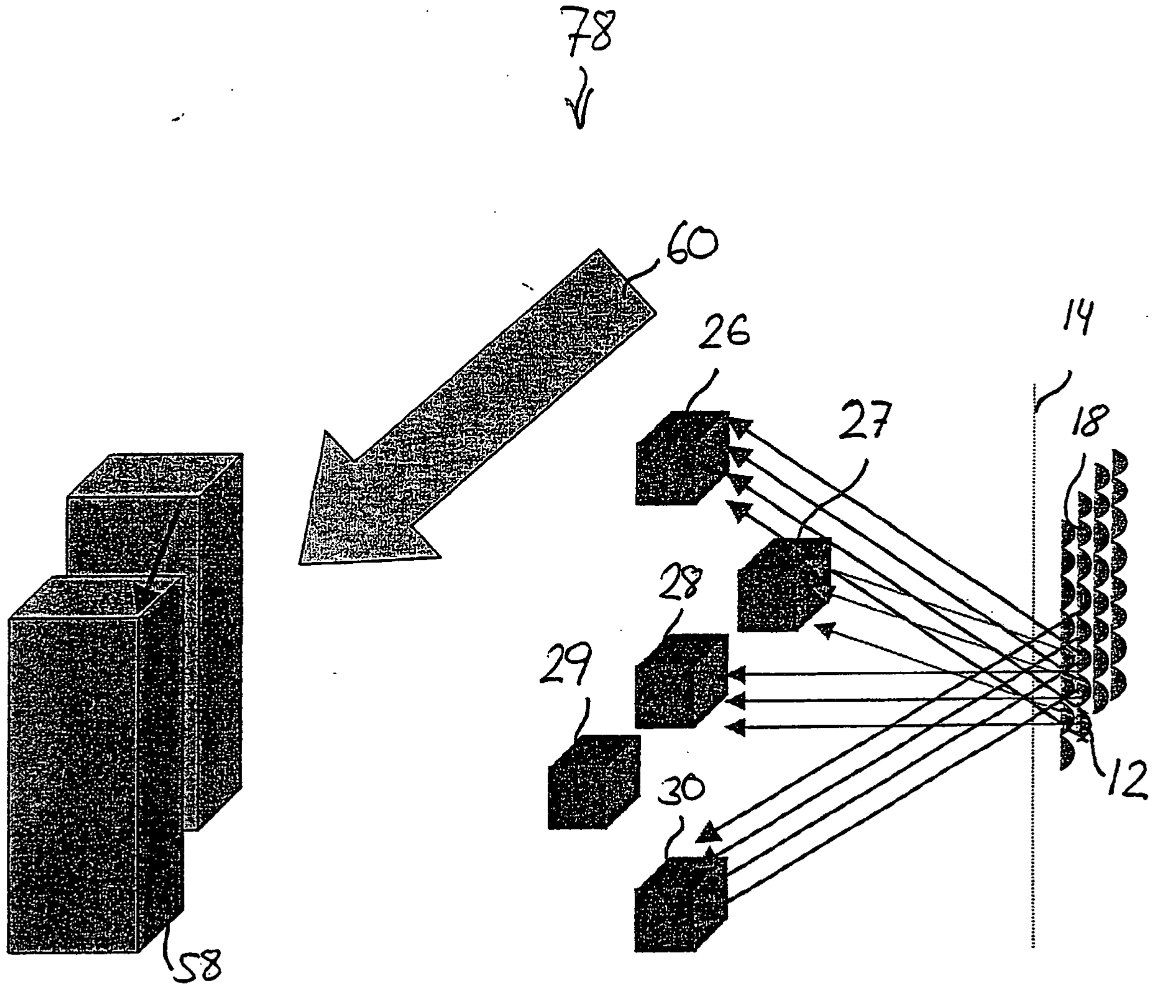


Fig. 37

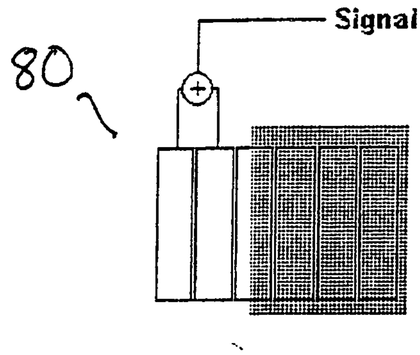


Fig. 38

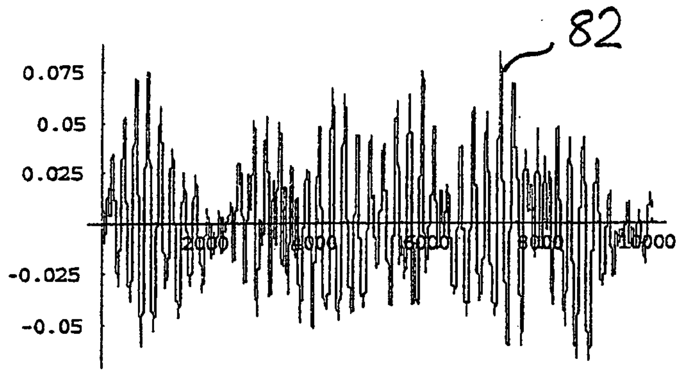


Fig. 39

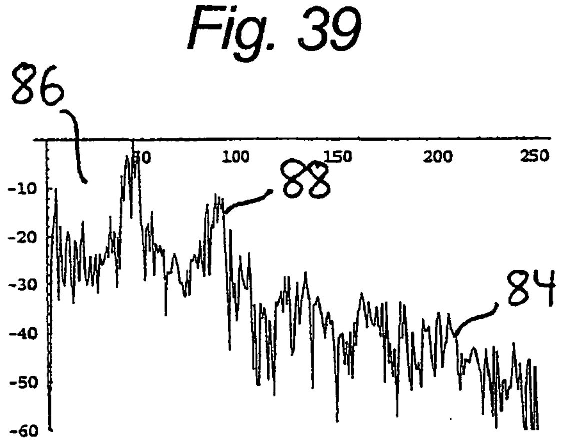


Fig. 40

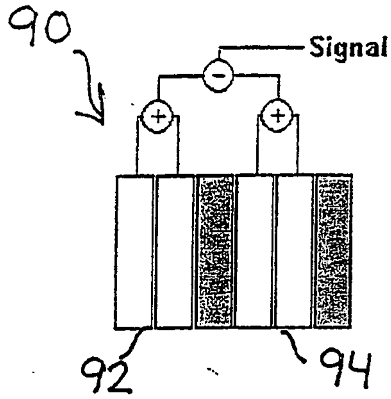


Fig. 41

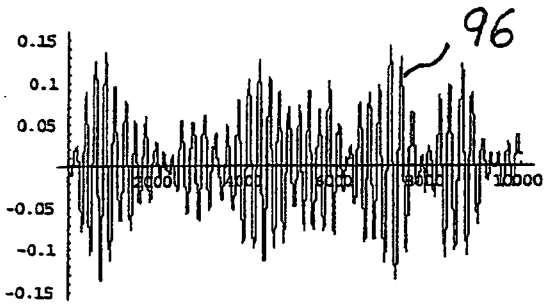


Fig. 42

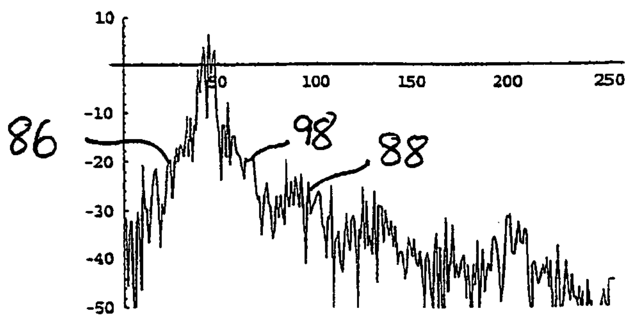


Fig. 43

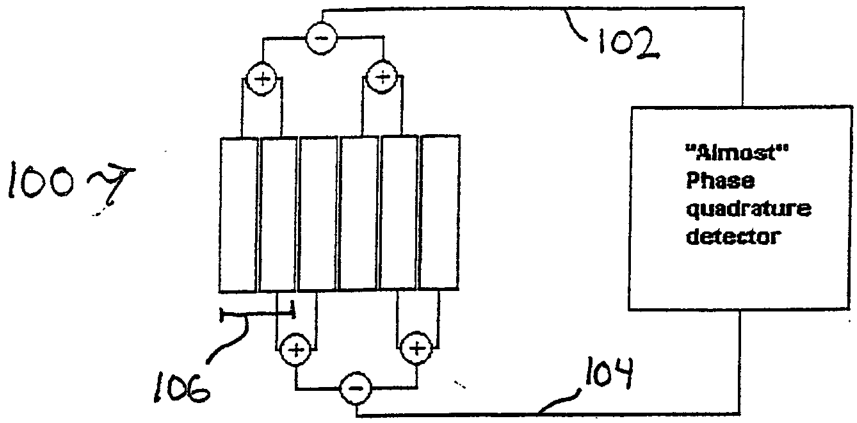


Fig. 44

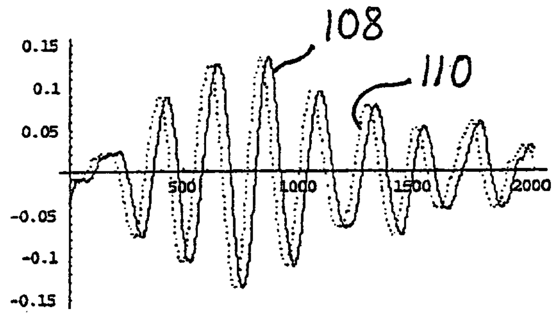


Fig. 45

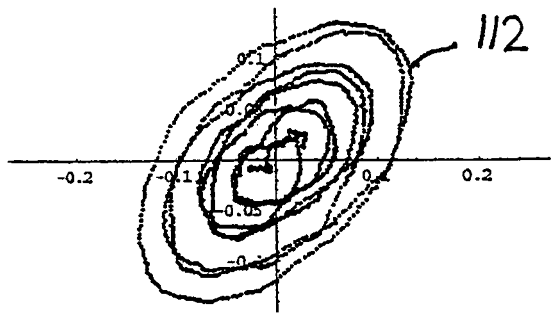


Fig. 46

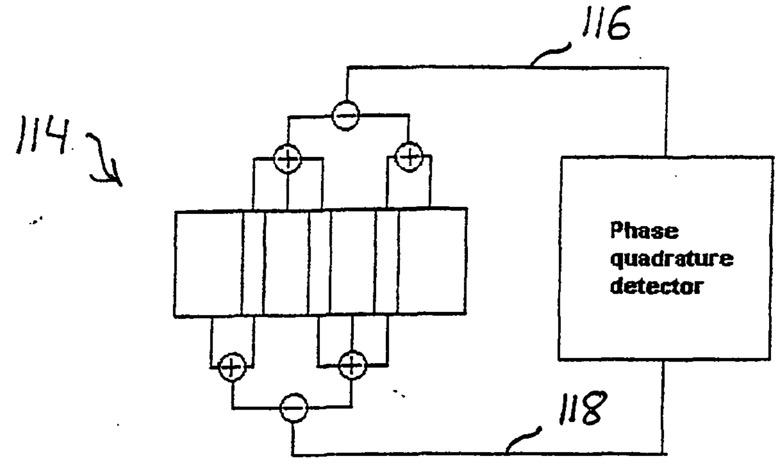


Fig. 47

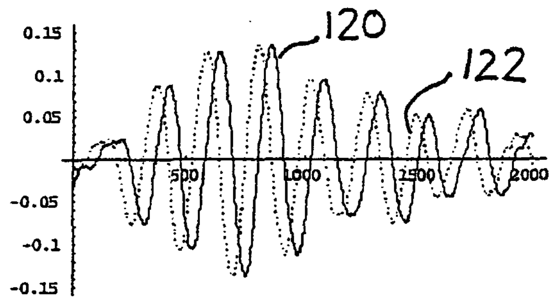


Fig. 48

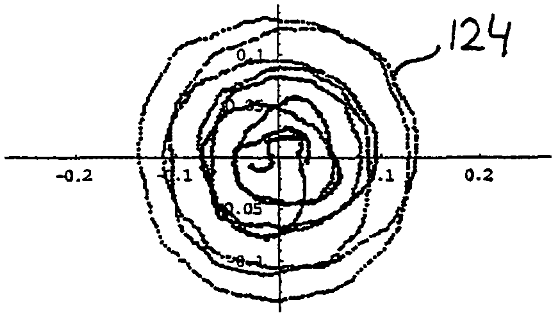


Fig. 49

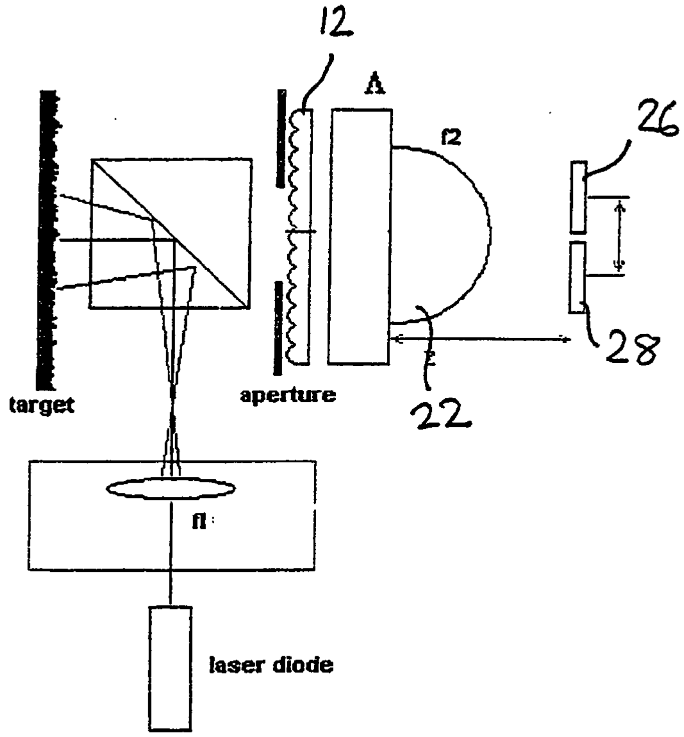


Fig. 50

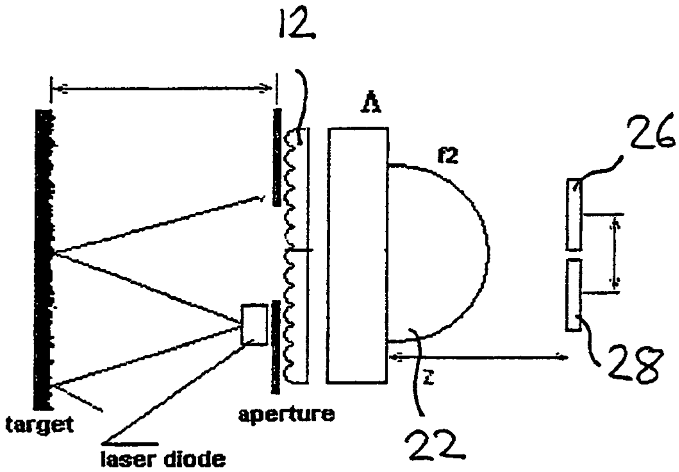


Fig. 51

Fig. 52

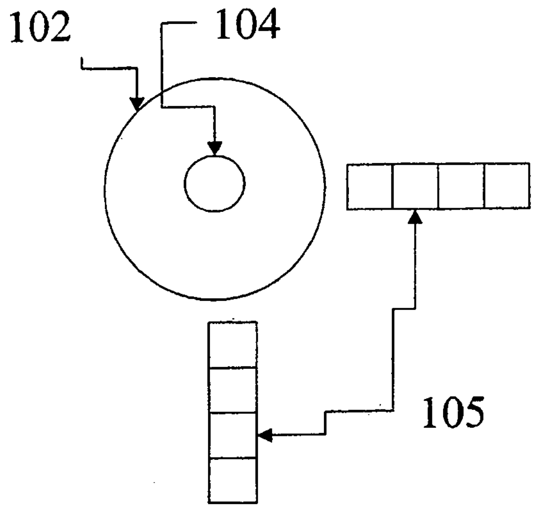


Fig. 53

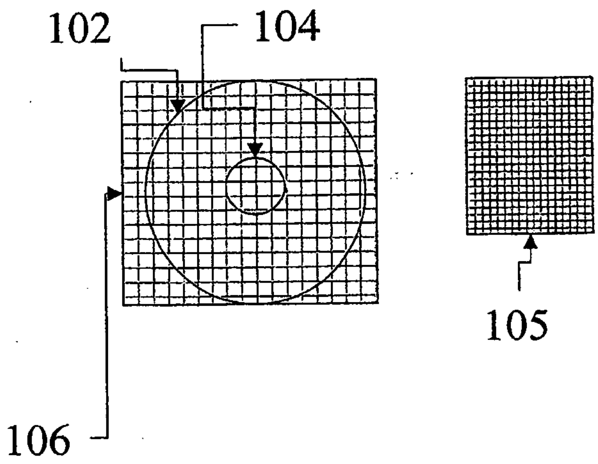

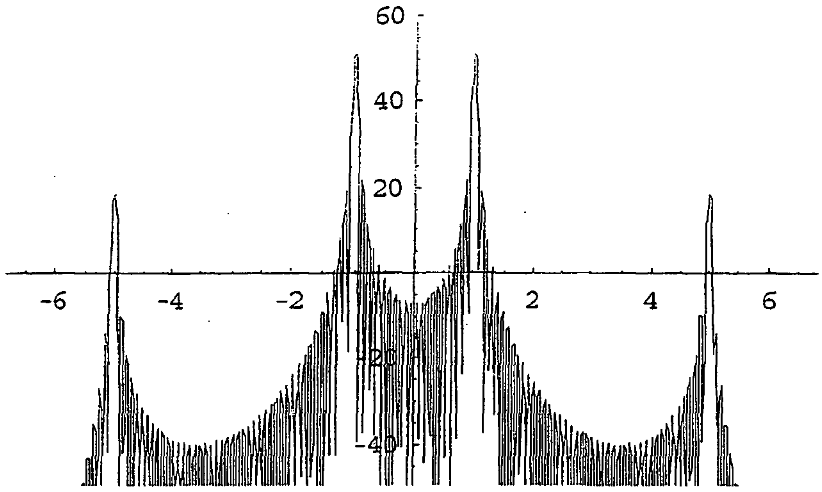


Fig. 54

Logarithmic power spectrum

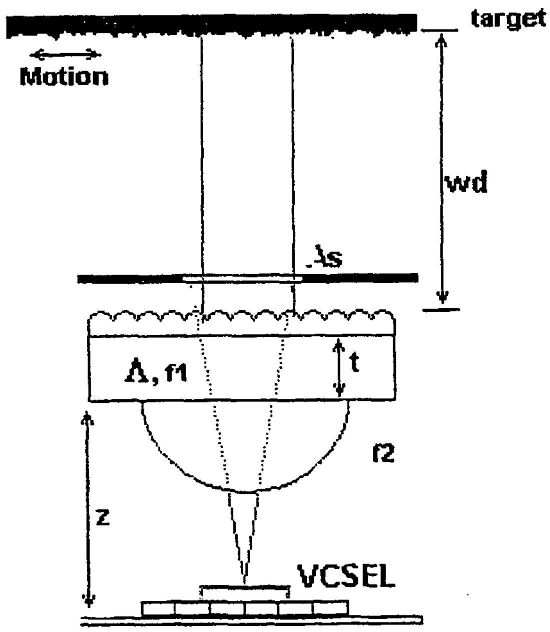


Fig. 55

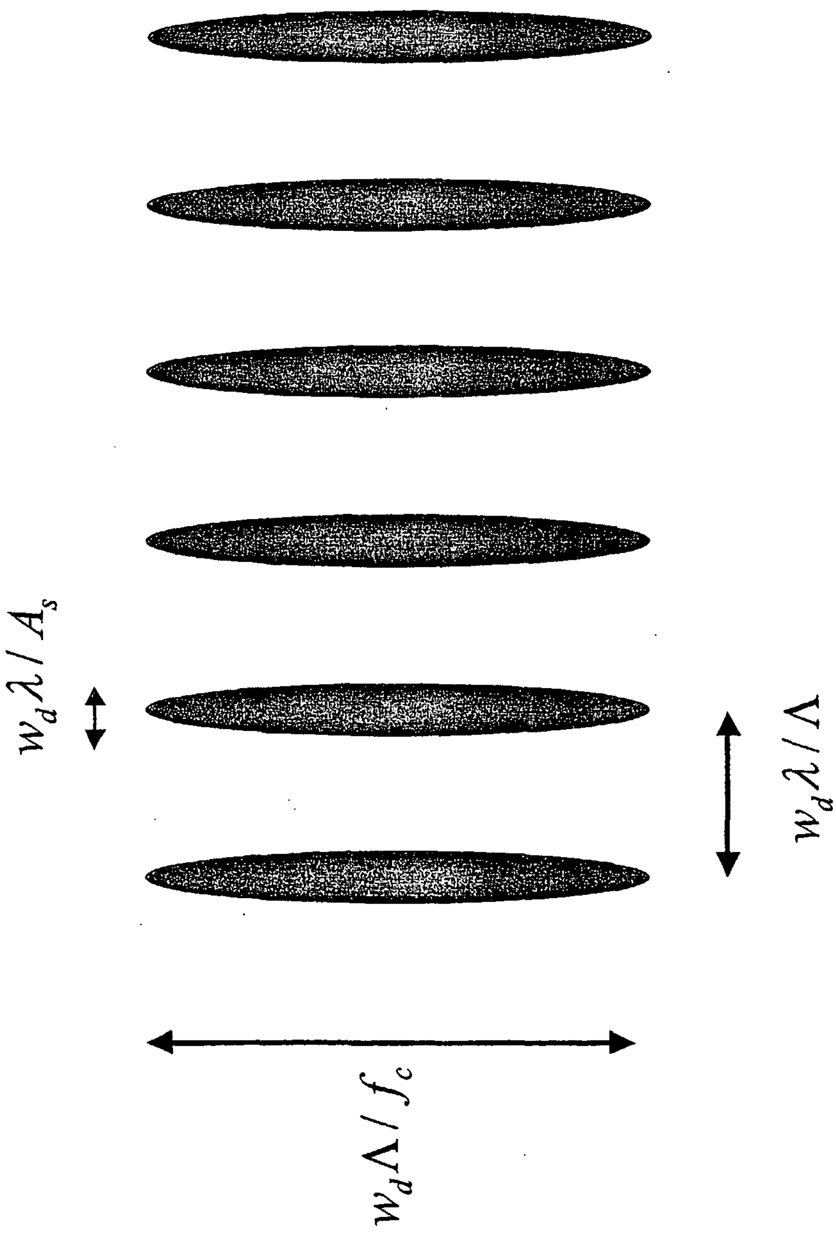


Fig. 56

Fig. 57

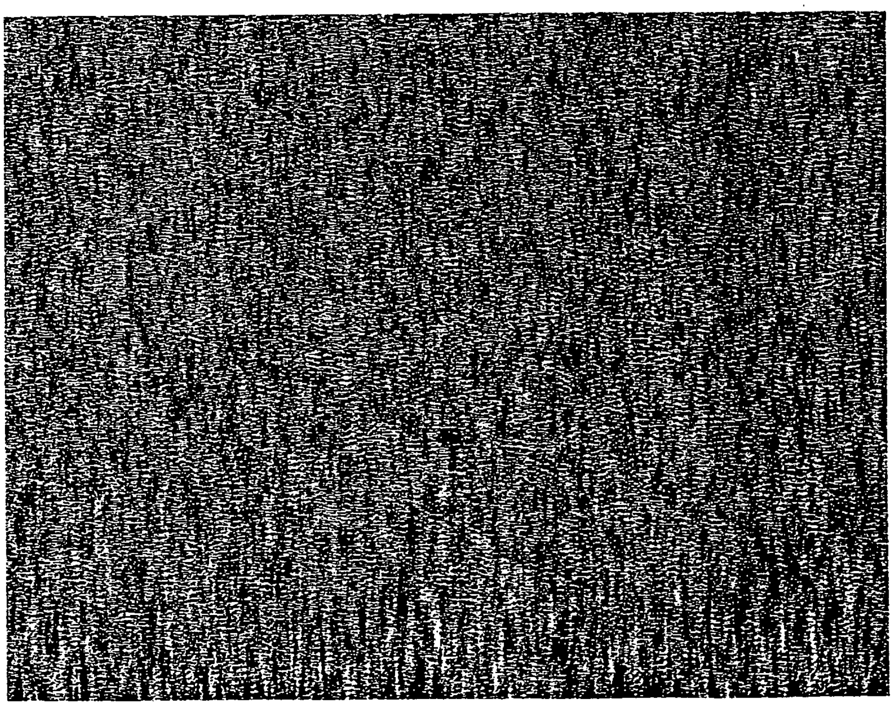

Fig. 58

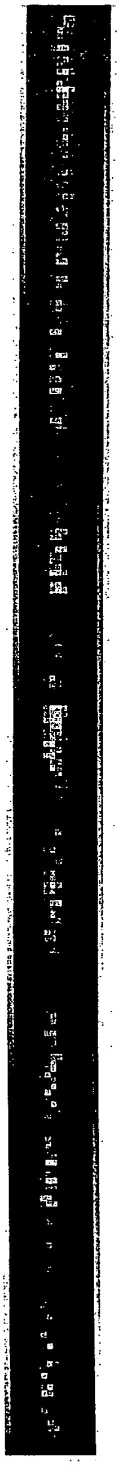

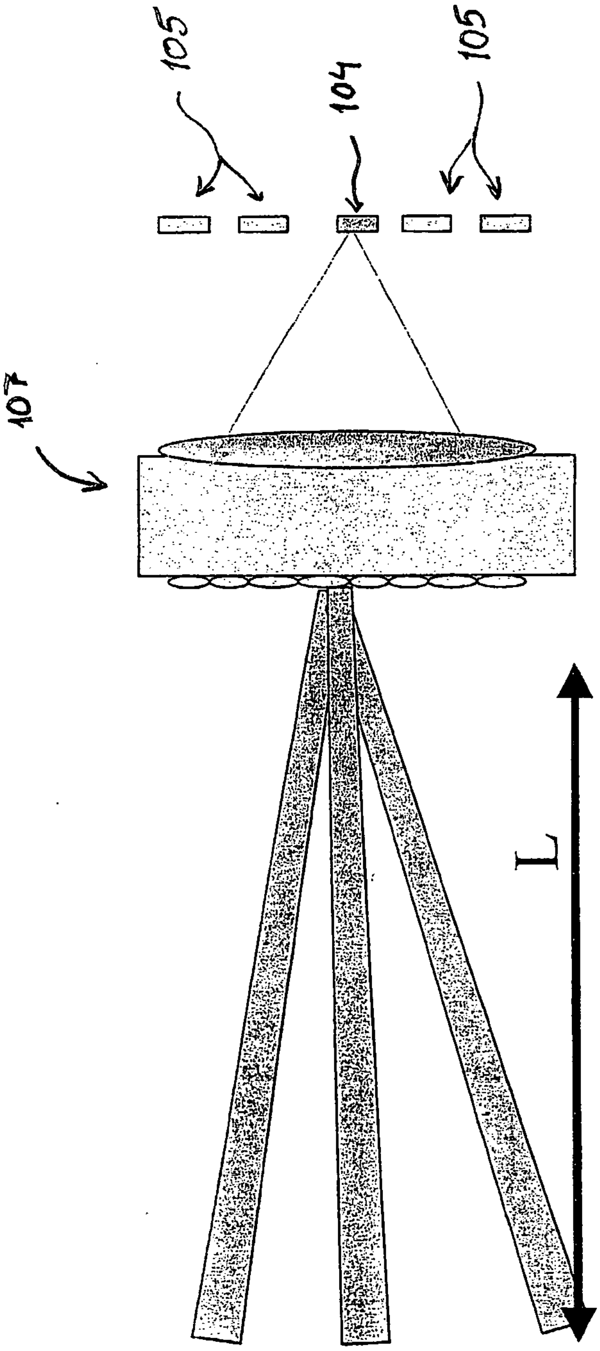


Fig. 59

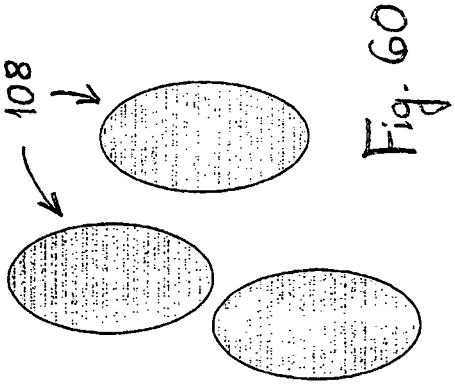


Fig. 60

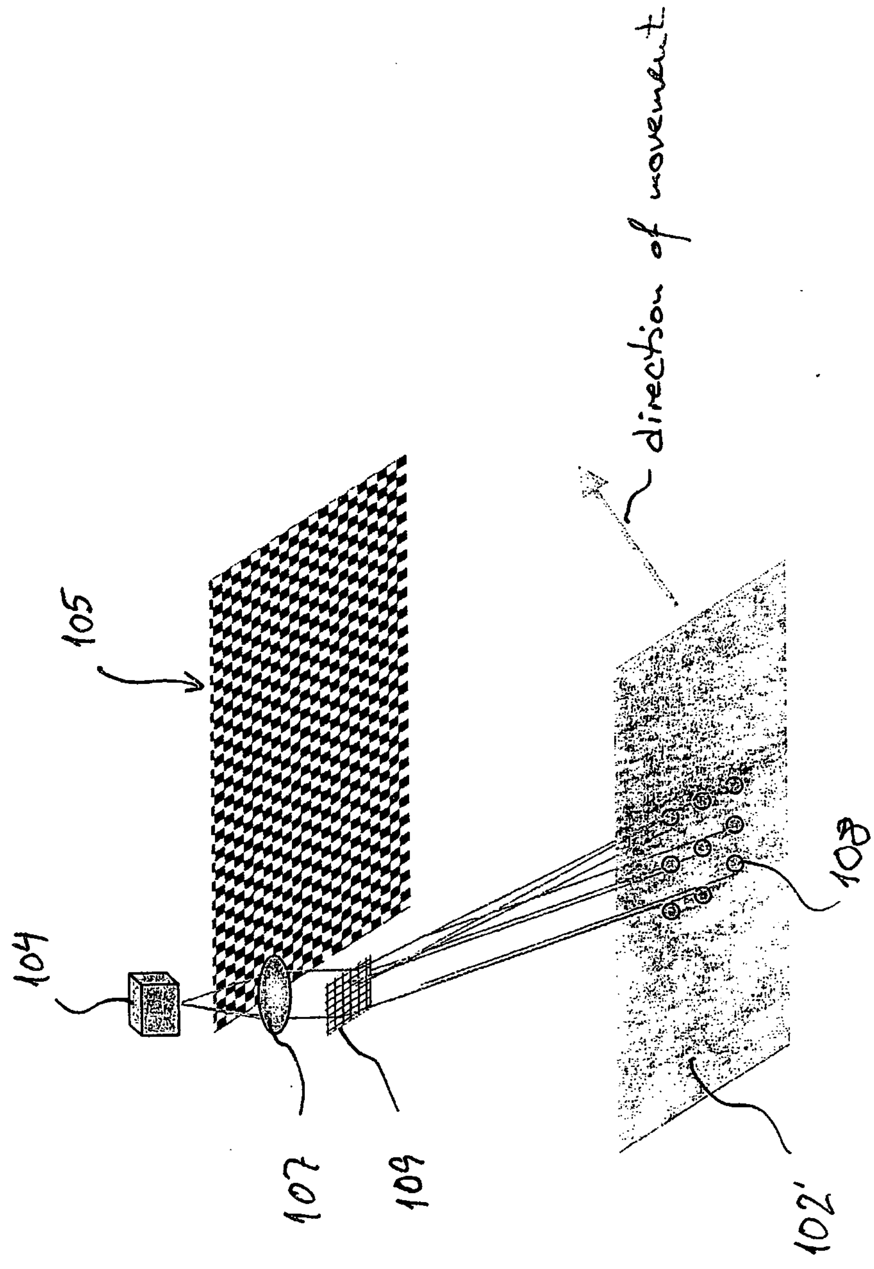


Fig. 61

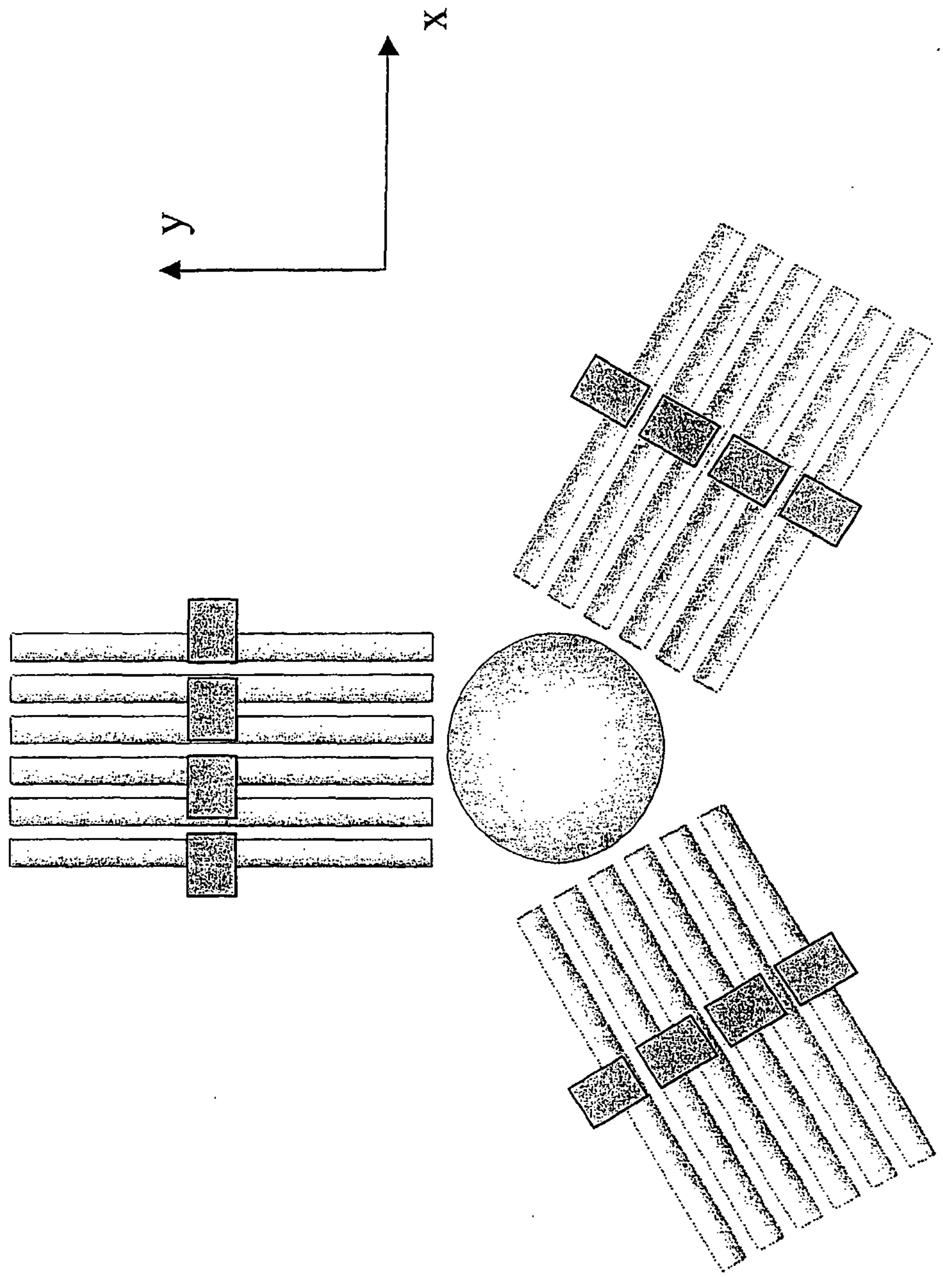


Fig. 62

Fig. 63

Cylinder lens array plane with three elements

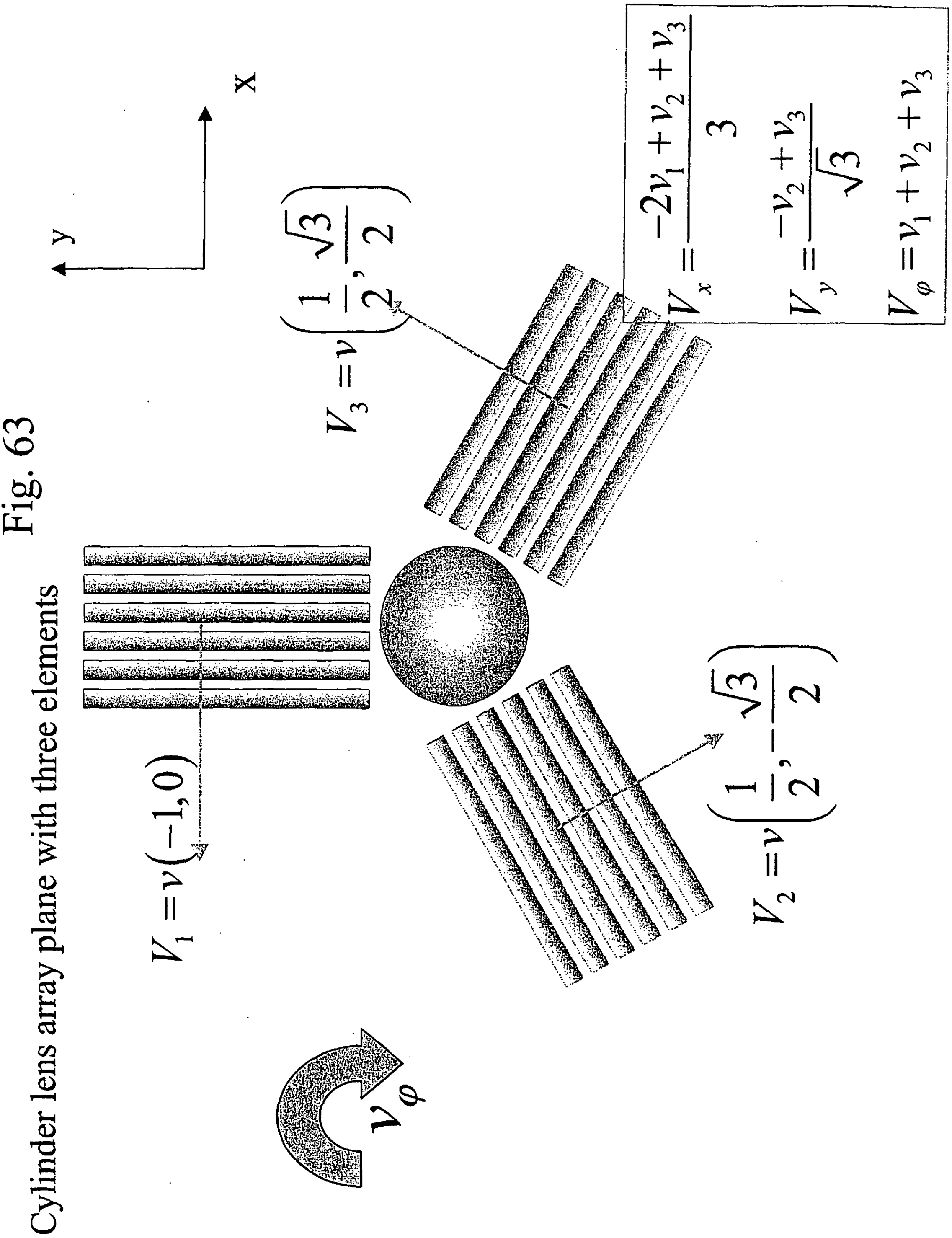

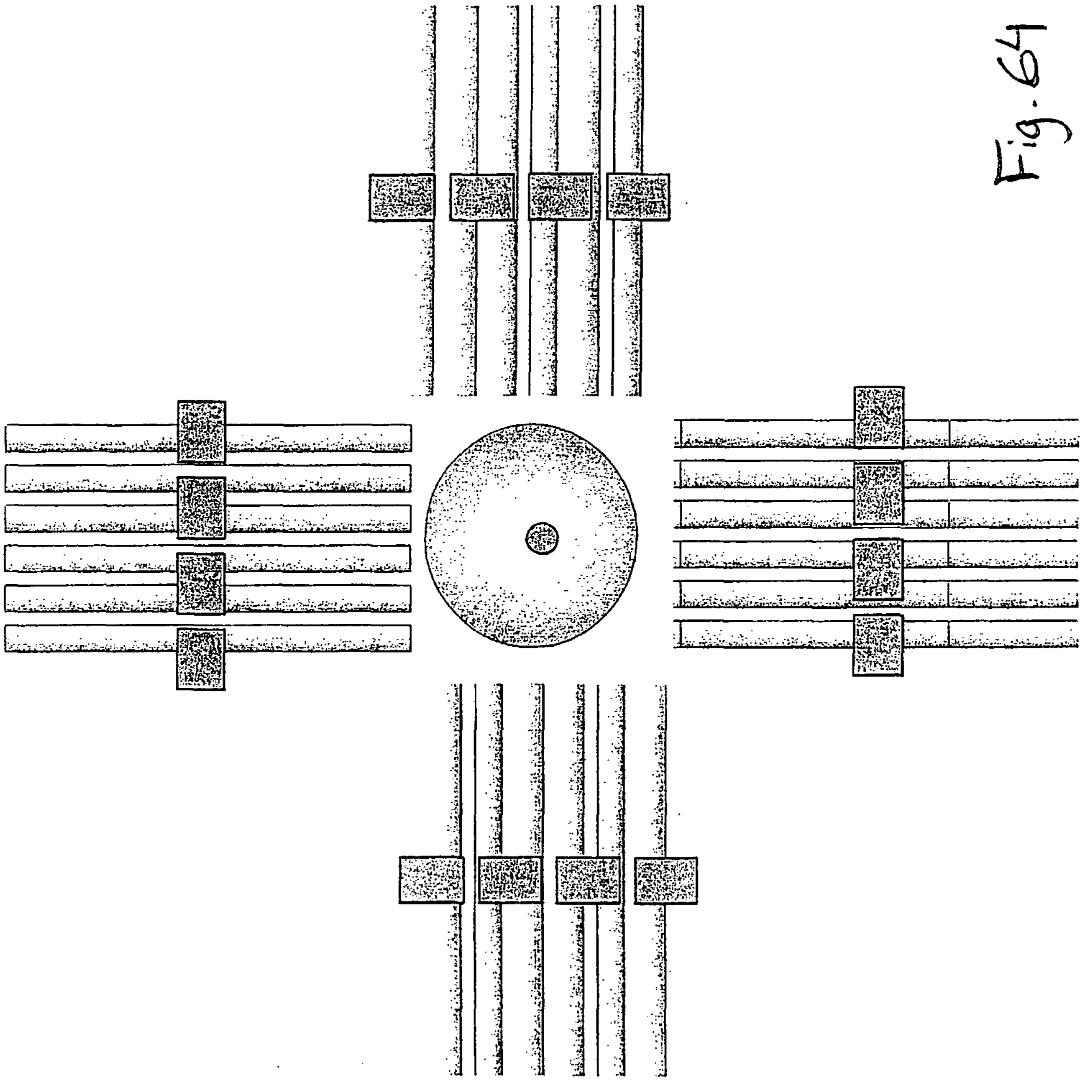

Fig. 64

Fig. 65

Cylinder lens array plane with four elements

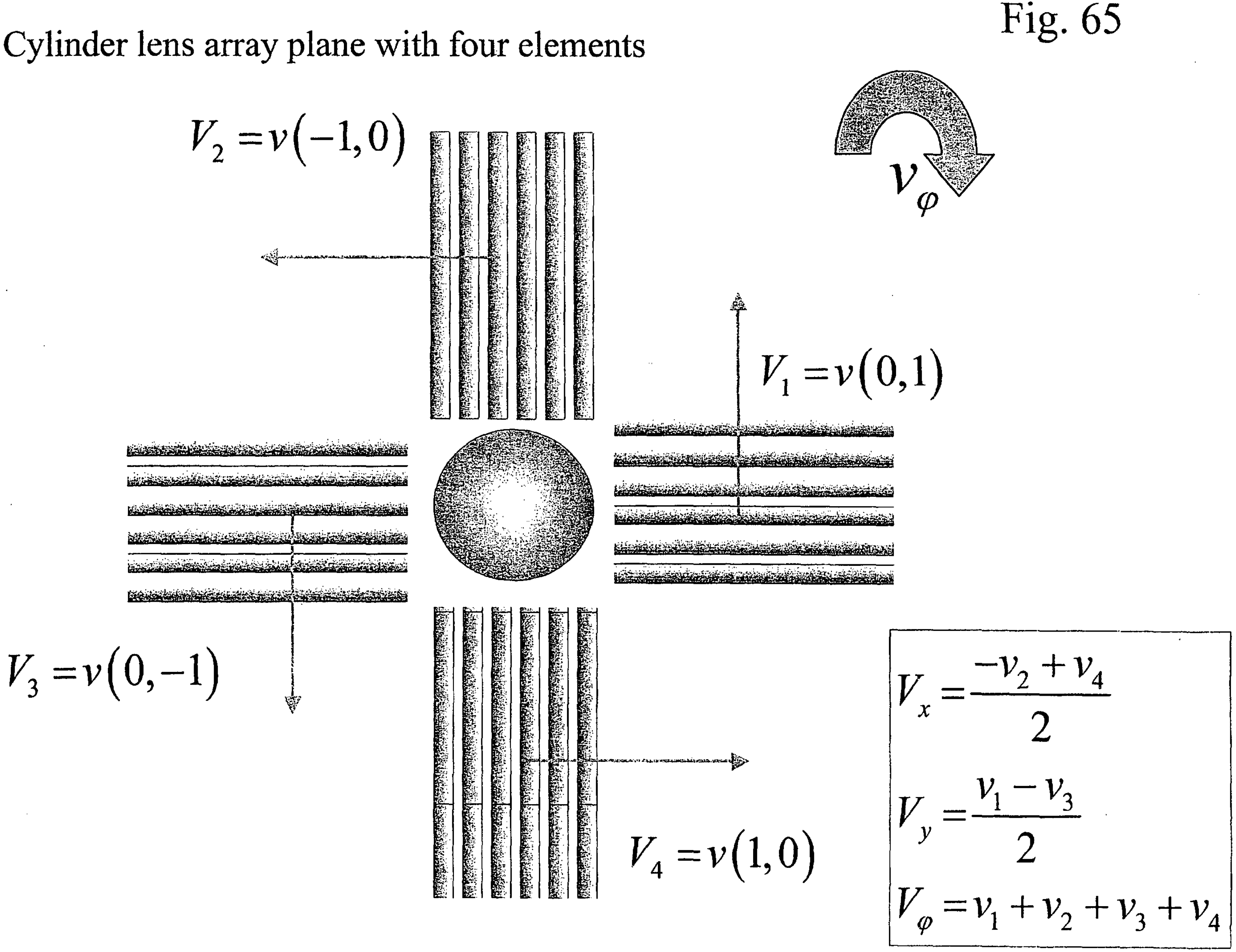


$$V_x = \frac{-v_2 + v_4}{2}$$

$$V_y = \frac{v_1 - v_3}{2}$$

$$V_\varphi = v_1 + v_2 + v_3 + v_4$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5907152 A
- JP 61095433 A
- WO 9836347 A
- WO 02093342 A